# EUROPÄISCHE PATENTANMELDUNG

(11) **EP 4 715 341 A1**
(43) Veröffentlichungstag der Anmeldung: **25.03.2026**
(21) Anmeldenummer: 24201561.8
(22) Anmeldetag: 20.09.2024
(51) Int. Cl.: G01F 23/263, G01F 23/80, G01F 25/20, G01M 3/00

(54) **VERFAHREN ZUM DETEKTIEREN EINES MESSOBJEKTS MITTELS EINES SENSORS MIT SELBSTÜBERWACHUNG SEINER MESSPOSITION, UND SENSOR, INSBESONDERE EINGERICHTET ZUM DURCHFÜHREN EINES SOLCHEN VERFAHRENS**

(71) Anmelder: Rechner Industrie-Elektronik GmbH, 68623 Lampertheim (DE)
(72) Erfinder: Bischler, Eduard, 68623 Lampertheim (DE); Kohler, Armin, 68623 Lampertheim (DE); Gebhardt, Stefan, 68623 Lampertheim (DE)
(74) Vertreter: Blumbach · Zinngrebe Patentanwälte PartG mbB

(57) **Zusammenfassung**

Die Erfindung betrifft ein Verfahren zum Detektieren eines Messobjekts in einer Messanordnung mittels eines Sensors und einen Sensor umfassend eine Messelektronik mit einer aktiven Fläche, die eine Messelektrode und eine Gegenelektrode aufweist, und mit einer Auswerteeinheit. Das Verfahren umfasst ein Erzeugen (A) eines räumlichen Messfeldes, ein Ermitteln (B) eines Kalibrierwerts (R₀), ein Anbringen (C) des Sensors an einer Oberfläche der Messanordnung zum Messen in einer Messposition, ein Ermitteln (D) eines Einstellwerts (R_{E}) in der Messposition bei fehlendem Messobjekt innerhalb des Messfeldes, ein Festlegen (E) eines Schwellwerts (S), der durch einen zwischen Kalibrierwert und Einstellwert liegendem Wert definiert wird, ein Aktivieren eines Messvorgangs (F) zum Detektieren des Messobjekts in der Messposition und kapazitives Erfassen (G) eines Messsignals, wobei ein Warnsignal ausgegeben wird (H2), falls der dem Messsignal entsprechende Messwert (M) kleiner als oder gleich dem festgelegten Schwellwert ist.

## Beschreibung

Die vorliegende Erfindung betrifft ein Verfahren zum Detektieren eines Messobjekts in einer Messanordnung mittels eines Sensors sowie einen Sensor zum Detektieren eines Messobjekts. Der Sensor weist eine Messelektronik mit einer aktiven Fläche, die mindestens eine Messelektrode und mindestens eine Gegenelektrode besitzt, und mit einer Auswerteeinheit zum Auswerten eines von der mindestens einen Messelektrode erfassten Messsignals auf. Der Sensor ist insbesondere zum kapazitiven Erfassen von Messsignalen zum Detektieren des Messobjekts innerhalb des Messfeldes des Sensors eingerichtet. Das zu detektierende Messobjekt kann insbesondere ein Füllgut sein, dessen Füllstand in einem Behältnis ermittelt werden soll oder das aus einer Leckage eines Behältnisses ausgetreten ist.

Sensoren, insbesondere Näherungssensoren, kommen häufig zum Einsatz, wenn es um das Erfassen, insbesondere ein kapazitives Erfassen, eines Messobjekts innerhalb eines vorbestimmten Messvolumens geht. Solche Sensoren detektieren Messobjekte, die sich in ihrem Messfeld befinden, indem sie die Wechselwirkung des Messobjekts mit einem elektrischen Wechselfeld, das durch eine Elektrode des Sensors erzeugt wird, nutzen. Dabei erfolgt eine Kapazitätsänderung, die durch die Anwesenheit des Messobjekts im Wechselfeld in Abhängigkeit von der jeweiligen Permittivitätszahl εᵣ des Messobjekts hervorgerufen wird.

Beispielsweise werden für kapazitive Füllstandmessungen in Behältern häufig Messverfahren basierend auf einem kapazitiven Erfassen von Messsignalen mittels entsprechender Sensoren zum Detektieren eines Füllstands angewendet. Dabei kann ein Sensor beispielsweise an einer dielektrischen Seitenwand oder Bodenwand eines Behälters montiert werden, um hinter dieser einen Füllstand im Behälter zu erfassen. Ferner werden solche Messverfahren und solche Sensoren beispielsweise zum Erkennen einer Leckage aus einem Behältnis eingesetzt, wobei die hierzu zum Einsatz kommenden Sensoren auch als sog. LEAK-Sensoren bezeichnet werden. Beispielsweise kann ein Sensor hierzu beabstandet vor einer Bodenfläche in einem definierten Abstand montiert werden und eine vorgesehene Messposition einnehmen, um eine Leckage des Behältnisses durch Erfassen von Füllgut auf der Bodenfläche zu erkennen. Kommt es zu einer unbeabsichtigten und ungewollten Veränderung der Position des Sensors derart, dass sich dieser nicht mehr in der vorgesehenen Messposition befindet, so verändert sich auch das von dem Sensor erfasste Messsignal. Wird diese Veränderung der Einbaulage des Sensors nicht erkannt, so kann dies dazu führen, dass das erfasste Messsignal fehlinterpretiert wird, z. B. als ein fehlendes Vorhandensein von Füllgut gewertet wird.

Vor dem zuvor genannten technischen Hintergrund ist es eine Aufgabe der vorliegenden Erfindung, ein weiteres Verfahren zum Detektieren eines Messobjekts mittels eines Sensors sowie einen Sensor zum Detektieren eines Messobjekts bereitzustellen, insbesondere mittels welchem das Detektieren eines Messobjekts und ein insbesondere ein diesbezügliches Verfahren durchführender Sensor verbessert werden, und zwar insbesondere dahingehend verbessert werden, dass eine Selbstüberwachung der Messposition des Sensors erfolgt und ein Abweichen von der vorgesehenen Messposition des Sensor unmittelbar festgestellt werden kann. Ein solches Abweichen von der Messposition kann z. B. durch ein Verrutschen oder Kippen des Sensors oder auch durch Krafteinwirkung auf den Sensor hervorgerufen werden.

Die zuvor genannte Aufgabe wird durch die Merkmale der unabhängigen Ansprüche gelöst sowie durch die weiteren Merkmale der jeweiligen Unteransprüche ausgestaltet und weiterentwickelt.

Entsprechend schlägt die Erfindung zur Lösung der Aufgabe ein Verfahren zum Detektieren eines Messobjekts in einer Messanordnung mittels eines Sensors, und zwar insbesondere zum kapazitiven Erfassen von Messsignalen zum Detektieren eines Messobjekts innerhalb eines räumlichen Messfeldes eines Sensors, vor. Der Sensor weist eine Messelektronik mit einer aktiven Fläche, die mindestens eine Messelektrode und mindestens eine Gegenelektrode aufweist, und mit einer Auswerteeinheit zum Auswerten eines von der mindestens einen Messelektrode erfassten Messsignals auf. Das Verfahren umfasst die folgenden Schritte:
- Erzeugen eines räumlichen Messfeldes durch die Messelektronik des Sensors, wobei sich das Messfeld im Wesentlichen quer zur aktiven Fläche und von der aktiven Fläche ausgehend erstreckt,
- Ermitteln eines Kalibrierwerts durch kapazitives Erfassen und Auswerten eines ersten Messsignals mittels der Messelektronik des Sensors, und zwar vor Anbringung des Sensors an einer Oberfläche einer Messanordnung zum Messen in einer Messposition, sowie Speichern des Kalibrierwerts in der Messelektronik des Sensors,
- Anbringen des Sensors an der Oberfläche der Messanordnung zum Messen in der Messposition, in welcher sich ein Bestandteil der Messanordnung innerhalb des Messfeldes des Sensors befindet,
- Ermitteln eines Einstellwerts durch kapazitives Erfassen und Auswerten eines zweiten Messsignals mittels der Messelektronik des Sensors bei sich in der Messposition befindlichem Sensor und bei fehlendem Messobjekt innerhalb des Messfeldes des Sensors sowie Speichern des Einstellwerts in der Messelektronik des Sensors, wobei der Einstellwert größer als der Kalibrierwert ist,
- Festlegen eines Schwellwerts durch die Messelektronik derart, dass dieser durch einen zwischen dem Kalibrierwert und dem Einstellwert liegenden Wert definiert wird,
- Aktivieren eines Messvorgangs zum Detektieren des Messobjekts innerhalb des Messfeldes bei sich in der Messposition befindlichem Sensor,
- kapazitives Erfassen und Auswerten eines dritten Messsignals mittels der Messelektronik des Sensors und
- im Fall, dass das von der Messelektronik ausgewertete erfasste dritte Messsignal einem Messwert entspricht, der kleiner als der festgelegte Schwellwert oder gleich dem festgelegten Schwellwert ist, Ausgeben eines Warnsignals.

Das erfindungsgemäße Verfahren zeichnet sich somit insbesondere dadurch aus, dass ein Kalibrierwert und zusätzlich dazu ein Einstellwert ermittelt werden. D. h. bevor der Messvorgang zum Detektieren eines Messobjekts erfolgt, werden zunächst zwei voneinander verschiedene Referenzwerte bestimmt, von denen sich ein erster Referenzwert bzw. der Kalibrierwert auf einen ersten Zustand des Sensors bezieht, in welchem der Sensor sich nicht in der vorgesehenen Messposition befindet, und sich ein zweiter Referenzwert bzw. der Einstellwert auf einen zweiten Zustand des Sensors bezieht, in welchem der Sensor sich in der vorgesehenen Messposition befindet. Die Messposition des Sensors entspricht der Position des Sensors, die der Sensor nach ordnungsgemäßem Anbringen an der Oberfläche der Messanordnung einnimmt. Das Ermitteln dieser zwei Referenzwerte dient insbesondere dazu, dass während des Messvorgangs zum Detektieren des Messobjekts überprüft bzw. überwacht werden kann, ob sich der Sensor weiterhin in seiner Messposition befindet oder ob der Sensor seine vorgesehene Messposition verlassen hat und ein Montagefehler bzw. Einbaufehler vorliegt. Das Messobjekt kann insbesondere ein Füllgut, z. B. eine Flüssigkeit oder ein Schüttgut, sein. Das Verfahren kann insbesondere ein Messverfahren zum Messen eines Füllstandes in einem Behälter oder zum Erkennen einer Leckage aus einem Behälter sein. Die Messanordnung bezeichnet im Rahmen der Erfindung insbesondere die Gesamtheit der zur Verwirklichung des Verfahrens nötigen Gegenstände, und somit den Sensor und den im Hinblick auf das Messobjekt zu untersuchenden Gegenstand, z. B. ein mit Füllgut befülltes Behältnis oder eine Oberfläche mit darauf befindlichem Füllgut infolge einer Leckage.

Der ermittelte Kalibrierwert entspricht einem Messwert des Sensors, der im Rahmen einer kapazitiven Erfassung eines ersten Messsignals in einem Zustand des Sensors ermittelt worden ist, in welchem der Sensor sich nicht in der Messposition befindet, aber einer Atmosphäre oder Umgebung ausgesetzt ist, die auch im Wesentlichen während des Messvorgangs vorhanden ist, wie bei Kalibriermessungen üblich ist. Insbesondere ist diese Atmosphäre Luft, kann aber in bestimmten Anwendungsfällen auch Vakuum sein. Nachdem der Kalibrierwert basierend auf dem ersten erfassten Messsignal ermittelt und gespeichert worden ist, wird der Sensor an einer Oberfläche einer Messanordnung angebracht, insbesondere lösbar angebracht, z. B. mittels einer entsprechend ausgebildeten Halteeinrichtung, um in seiner daraufhin eingenommenen Messposition Messungen durchzuführen. Die Messanordnung kann beispielsweise ein Behältnis, z. B. einen Behälter oder eine Wanne, umfassen, an dessen Oberfläche der Sensor angebracht wird. Die Oberfläche der Messanordnung kann z. B. eine Wandfläche oder eine Bodenfläche des Behältnisses, aber auch eine Bodenfläche eines Raumes sein. Der Sensor wird so an die Oberfläche der Messanordnung angebracht, dass er sich in einer Messposition befindet, in welcher sich ein Bestandteil der Messanordnung innerhalb des Messfeldes des Sensors befindet. Dieser Bestandteil der Messanordnung ist insbesondere dielektrisch oder leitfähig und kann z. B. die Oberfläche der Messanordnung, an der der Sensor angebracht ist, umfassen. Befindet sich der Sensor in der Messposition, so wird der Einstellwert ermittelt. Der Einstellwert entspricht einem Referenzwert bezogen auf die Messposition des Sensors, wobei sich kein Messobjekt innerhalb des Messfeldes des Sensors befindet. Mit anderen Worten, der Einstellwert entspricht einem Messwert des Sensors, der im Rahmen einer kapazitiven Erfassung eines zweiten Messsignals in einem Zustand des Sensors ermittelt worden ist, in welchem der Sensor sich in der Messposition befindet, und zwar bei fehlendem Vorhandensein des Messobjekts innerhalb des Messfeldes. Der Einstellwert ist größer als der Kalibrierwert, und zwar aufgrund einer durch den, sich innerhalb des Messfeldes befindlichen, Bestandteil der Messanordnung bedingten Einflussgröße. D. h. der Bestandteil der Messanordnung befindet sich bedingt durch die Einbaulage des Sensors innerhalb des Messfelds und verursacht eine positive Änderung der Sensorsignale bzw. der Messwerte. Der ermittelte Einstellwert wird in der Messelektronik des Sensors gespeichert, welche daraufhin einen zwischen dem Kalibrierwert und dem Einstellwert liegenden Wert als Schwellwert festlegt. Insbesondere wird der Schwellwert in Abhängigkeit von der zwischen dem Einstellwert und dem Kalibrierwert liegenden Differenz festgelegt.

Bei sich in der Messposition befindlichem Sensor erfolgt das Aktivieren eines Messvorgangs zum Detektieren des Messobjekts, sodass ein kapazitives Erfassen eines dritten Messsignals innerhalb des Messfeldes und ein entsprechendes Auswerten erfolgt. Insbesondere erfolgt das kapazitive Erfassen in regelmäßigen zeitlichen Abständen oder auch kontinuierlich, um Messwertänderungen schnell zu erkennen. Der jeweils ermittelte Messwert wird dann mit dem festgelegten Schwellwert verglichen. Wird dabei festgestellt, dass das ausgewertete erfasste dritte Messsignal einem Messwert entspricht, der kleiner als der festgelegte Schwellwert oder gleich dem festgelegten Schwellwert ist, so wird ein Warnsignal ausgegeben, und zwar insbesondere auf Veranlassung der Messelektronik. Das Warnsignal weist darauf hin, dass sich der Sensor aktuell nicht bzw. nicht mehr in seiner Messposition bzw. seiner korrekten Montageposition befindet, insbesondere, dass er sich von dieser entfernt, z. B. gelöst, hat. Das Warnsignal wird daher als ein aktuell vorliegender Einbaufehler bzw. Montagefehler des Sensors gewertet. Somit ist es anhand des erfindungsgemäßen Verfahrens möglich, schnellstmöglich und auf einfache Weise einen Einbaufehler festzustellen und eine Fehlinterpretation von Messdaten zu vermeiden.

Wird hingegen festgestellt, dass das ausgewertete erfasste dritte Messsignal einem Messwert entspricht, der größer als der ermittelte Einstellwert ist, so wird dieses Messergebnis von der Messelektronik als ein Vorhandensein des Messobjekts innerhalb des Messfeldes interpretiert und demnach das Messobjekt detektiert. Insbesondere erfolgt ein Ausgeben des erfassten dritten Messsignals in Form eines Leckage-Messsignals oder eines Füllstands-Messsignals, z. B. mittels einer von dem Sensor umfassten Anzeigeeinrichtung. Für den Fall, dass der auf dem erfassten dritten Messsignal basierende Messwert größer als der festgelegte Schwellwert und kleiner als der ermittelte Einstellwert oder gleich dem ermittelten Einstellwert ist, so wird dieses Messergebnis von der Messelektronik als ein fehlendes Vorhandensein des Messobjekts innerhalb des Messfeldes interpretiert und als ein aktuell nicht vorliegender Einbaufehler des Sensors gewertet. Der Wertebereich zwischen dem Einstellwert und dem Schwellwert kann somit z. B. als (Fehler-)Toleranzbereich betrachtet werden.

Das kapazitive Erfassen des ersten, des zweiten und des dritten Messsignals kann auch ein kapazitives Erfassen einer jeweiligen Mehrzahl von ersten, zweiten und dritten Messsignalen umfassen, wobei der Schwellwert basierend auf der Mehrzahl von erfassten ersten und zweiten Messsignalen festgelegt wird, z. B. durch Ermitteln eines entsprechend gemittelten Kalibrierwerts und eines entsprechend gemittelten Einstellwerts. Alternativ können mehrerer Schwellwerte basierend auf der Mehrzahl von erfassten ersten und zweiten Messsignalen festgelegt werden.

Ferner schlägt die vorliegende Erfindung einen Sensor, insbesondere Näherungssensor, zum Detektieren eines Messobjekts in einer Messanordnung vor, der insbesondere zum Durchführen des zuvor beschriebenen Verfahrens eingerichtet ist. Der Sensor weist eine Messelektronik zum Erzeugen eines räumlichen Messfeldes sowie zum Detektieren eines Messobjekts innerhalb des Messfeldes auf. Die Messelektronik umfasst eine aktive Fläche, die mindestens eine Messelektrode und mindestens eine Gegenelektrode aufweist, wobei sich das Messfeld im Wesentlichen quer zur aktiven Fläche und von der aktiven Fläche ausgehend erstreckt. Zudem umfasst die Messelektronik eine Auswerteeinheit zum Auswerten eines von der mindestens einen Messelektrode erfassten Messsignals. Der Sensor ist an einer Oberfläche einer Messanordnung anbringbar, und zwar zum Messen in einer Messposition, in welcher sich ein Bestandteil der Messanordnung innerhalb des Messfeldes des Sensors befindet. Beispielsweise kann der Sensor eine Halteeinrichtung aufweisen, mittels welcher er an der Oberfläche der Messanordnung lösbar anbringbar ist. In der Messelektronik des Sensors ist ein Kalibrierwert speicherbar oder bereits gespeichert, welcher auf einem ersten Messsignal basiert, das in einem nicht in der Messposition befindlichen Zustand des Sensors erfasst worden ist. Ferner ist in der Messelektronik zudem ein Einstellwert speicherbar oder bereits gespeichert, welcher auf einem zweiten Messsignal basiert, das in einem in der Messposition befindlichen Zustand des Sensors bei fehlendem Messobjekt innerhalb des Messfeldes erfasst worden ist. Der Einstellwert ist größer als der Kalibrierwert. Die Messelektronik ist dazu eingerichtet, einen Schwellwert derart festzulegen, dass dieser durch einen zwischen dem Kalibrierwert und dem Einstellwert liegenden Wert definiert ist, und zwar insbesondere in Abhängigkeit von einer zwischen dem Einstellwert und dem Kalibrierwert vorliegenden Differenz. Der Sensor ist dazu eingerichtet, einen Messvorgang zum Detektieren des Messobjekts innerhalb des Messfeldes bei sich in der Messposition befindlichem Sensor zu starten und mittels der Messelektronik ein drittes Messsignal kapazitiv zu erfassen und auszuwerten. Der Sensor ist ferner dazu eingerichtet, für den Fall, dass das von der Messelektronik ausgewertete erfasste dritte Messsignal einem Messwert entspricht, der kleiner als der festgelegte Schwellwert oder gleich dem festgelegten Schwellwert ist, ein Warnsignal auszugeben. Dazu kann der Sensor z. B. eine Anzeigeeinrichtung zum optischen Darstellen des Warnsignals und/oder eine Einrichtung zum Ausgeben eines akustischen Warnsignals und/oder einen separaten Sensorausgang, über den er das Warnsignal z. B. als digitales Signal ausgeben kann, aufweisen.

Die aktive Fläche des Sensors kann zusätzlich zu der mindestens einen Messelektrode noch eine oder mehrere weitere Messelektroden umfassen, die zusammengenommen im Rahmen der Erfindung als Mehrzahl von Messelektroden bezeichnet werden. In diesem Fall umfasst der Sensor insbesondere ein sog. Array von Messelektroden zum ortsaufgelösten Erfassen von Messsignalen, wobei an eine jeweilige der Messelektroden insbesondere abwechselnd ein Messpotential anlegbar ist, z. B. mittels einer von dem Sensor umfassten Schalteinrichtung. Ergänzend oder auch alternativ kann die aktive Fläche des Sensors zusätzlich zu der mindestens einen Gegenelektrode noch eine oder mehrere weitere Gegenelektroden umfassen, die zusammengenommen im Rahmen der Erfindung als Mehrzahl von Gegenelektroden bezeichnet werden. An eine jeweilige der Gegenelektroden kann mittels der Schalteinrichtung entweder ein Schirmpotential oder ein Anregungspotential anlegbar sein. Auf eine der vorbeschriebenen Weisen kann der Sensor mittels der Messelektronik dazu eingerichtet sein, einen Schwellwert, sowie ferner einen Kalibrierwert und einen Einstellwert, basierend auf einer Mehrzahl von erfassten ersten und zweiten Messsignalen festzulegen oder mehrere Schwellwerte basierend auf der Mehrzahl von ersten und zweiten erfassten Messsignalen festzulegen.

Zudem schlägt die Erfindung eine Messanordnung mit einem Sensor, insbesondere einem Sensor wie zuvor beschrieben, vor, wobei der Sensor insbesondere dazu eingerichtet ist, das zuvor beschriebene Verfahren durchzuführen.

Die Erfindung wird nachfolgend anhand einiger bevorzugter, jedoch lediglich beispielhafter Ausführungsformen unter Bezugnahme auf die beigefügten Zeichnungen näher beschrieben. In den Zeichnungen zeigen:
- Fig. 1:: eine schematische Darstellung des Verfahrens gemäß einer Ausführungsform der Erfindung,
- Fig. 2:: eine perspektivische Ansicht und eine Seitenansicht auf einen erfindungsgemäßen Sensor gemäß einer ersten Ausführungsform der Erfindung, der insbesondere eingerichtet ist, das erfindungsgemäße Verfahren durchzuführen,
- Fig. 3:: ein Diagramm zum zeitlichen Verlauf des Verfahrens gemäß einer Ausführungsform der Erfindung,
- Fig. 4:: eine perspektivische Ansicht und eine Seitenansicht auf einen erfindungsgemäßen Sensor gemäß einer zweiten Ausführungsform der Erfindung, der insbesondere eingerichtet ist, das erfindungsgemäße Verfahren durchzuführen,
- Fig. 5:: drei Seitenansichten auf einen erfindungsgemäßen Sensor gemäß einer dritten Ausführungsform der Erfindung, der insbesondere eingerichtet ist, das erfindungsgemäße Verfahren durchzuführen,
- Fig. 6:: zwei Seitenansichten auf einen erfindungsgemäßen Sensor gemäß einer vierten Ausführungsform der Erfindung, der insbesondere eingerichtet ist, das erfindungsgemäße Verfahren durchzuführen,
- Fig. 7:: eine Seitenansicht auf einen erfindungsgemäßen Sensor gemäß einer fünften Ausführungsform der Erfindung, der insbesondere eingerichtet ist, das erfindungsgemäße Verfahren durchzuführen,
- Fig. 8:: vier Seitenansichten auf einen erfindungsgemäßen Sensor gemäß einer sechsten Ausführungsform der Erfindung, der insbesondere eingerichtet ist, das erfindungsgemäße Verfahren durchzuführen,
- Fig. 9:: zwei Seitenansichten auf einen erfindungsgemäßen Sensor gemäß einer siebten Ausführungsform der Erfindung, der insbesondere eingerichtet ist, das erfindungsgemäße Verfahren durchzuführen, und
- Fig. 10:: vier Seitenansichten auf einen erfindungsgemäßen Sensor gemäß einer achten Ausführungsform der Erfindung, der insbesondere eingerichtet ist, das erfindungsgemäße Verfahren durchzuführen.

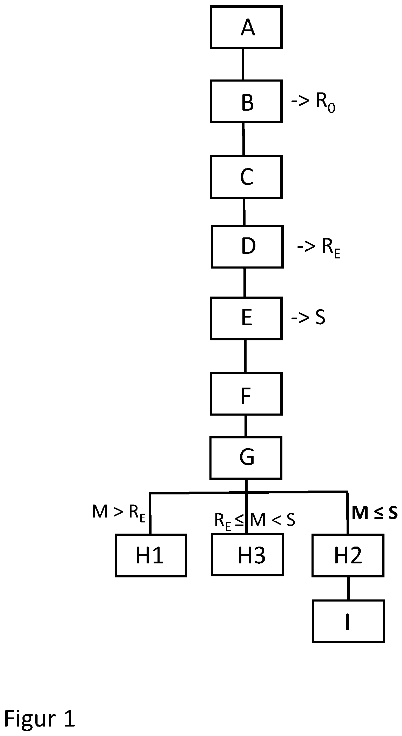

Figur 1 zeigt eine schematische Darstellung des Verfahrens zum Detektieren eines Messobjekts in einer Messanordnung mittels eines Sensors gemäß einer Ausführungsform der Erfindung. Das Messobjekt kann insbesondere ein Füllgut, z. B. eine Flüssigkeit oder ein Schüttgut, sein. Das Verfahren kann insbesondere ein Verfahren zum Messen eines Füllstandes in einem Behältnis oder zum Messen einer Leckage aus einem Behältnis sein. Der Sensor ist insbesondere ein Näherungssensor zum kapazitiven Erfassen von Messsignalen innerhalb eines räumlichen Messfeldes des Sensors. Der im Rahmen des Verfahrens zum Einsatz kommende Sensor weist eine Messelektronik mit einer aktiven Fläche, die mindestens eine Messelektrode und mindestens eine Gegenelektrode umfasst, und mit einer Auswerteeinheit zum Auswerten eines von der mindestens einen Messelektrode erfassten Messsignals auf. Die aktive Fläche des Sensors kann folglich auch eine Mehrzahl von Messelektroden einschließlich der zumindest einen Messelektrode, beispielsweise ein Array von Messelektroden zum ortsaufgelösten Erfassen von entsprechenden Messsignalen, und/oder eine Mehrzahl von Gegenelektroden einschließlich der zumindest einen Gegenelektrode umfassen. An die jeweiligen Messelektroden kann mittels einer Schalteinrichtung des Sensors jeweils abwechselnd ein Messpotential angelegt werden. An die jeweiligen Gegenelektroden kann mittels einer Schalteinrichtung des Sensors ein Anregungspotential oder ein Schirmpotential angelegt werden. Je nach Anzahl der Messelektroden und Gegenelektroden ergibt sich eine daraus resultierende Anzahl von Messkanälen des Sensors und eine entsprechende Anzahl von erfassen Messsignalen bzw. Messwerten.

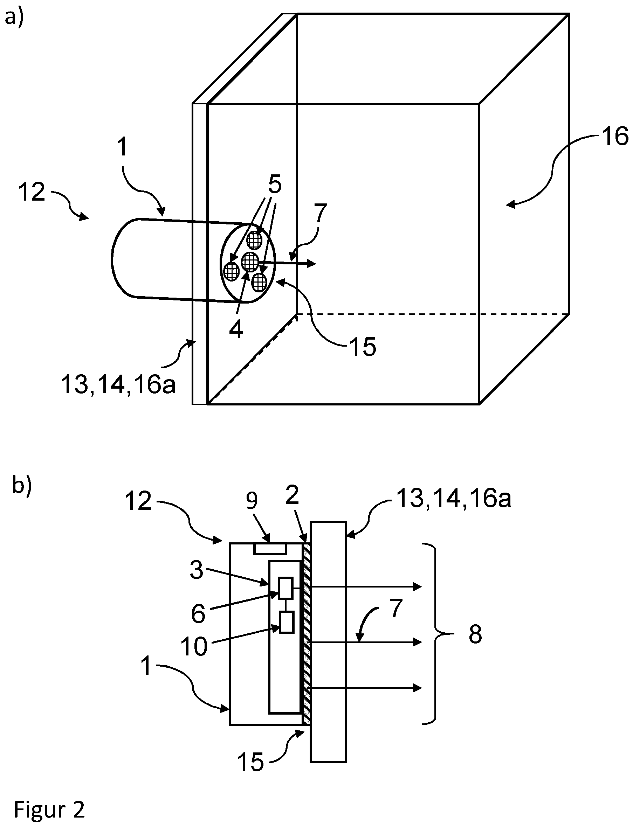

Das Verfahren umfasst gemäß dem in Figur 1 dargestellten Block A ein Erzeugen eines räumlichen Messfeldes durch die Messelektronik des Sensors. Das Messfeld erstreckt sich dabei im Wesentlichen quer zur aktiven Fläche und von der aktiven Fläche ausgehend, wie z. B. in Figur 2 gezeigt, wobei die Wirkrichtung des Messfeldes 8 darin mit einem mit Bezugszeichen 7 gekennzeichneten Pfeil symbolisiert ist. Gemäß Block B der Figur 1 erfolgt ein Ermitteln eines Kalibrierwerts R₀ durch kapazitives Erfassen und Auswerten eines ersten Messsignals oder auch mehrerer ersten Messsignale mittels der Messelektronik, und zwar vor Anbringung des Sensors an einer Oberfläche einer Messanordnung zum Messen in einer Messposition. Der ermittelte Kalibrierwert R₀ wird in der Messelektronik gespeichert und entspricht zumindest einem Messwert des Sensors, der im Rahmen des kapazitiven Erfassens einer Anzahl von ersten Messsignalen in einem Zustand des Sensors ermittelt worden ist, in welchem der Sensor sich nicht in der Messposition befindet, aber einer Atmosphäre ausgesetzt ist, die auch im Wesentlichen während des Messvorgangs vorhanden ist, wie dies bei Kalibriermessungen üblich ist. Insbesondere ist diese Atmosphäre Luft, kann aber in bestimmten Anwendungsfällen auch z. B. Vakuum sein.

Gemäß dem in Figur 1 skizzierten Block C erfolgt ein Anbringen des Sensors an der Oberfläche der Messanordnung zum Messen in der Messposition, in welcher sich ein Bestandteil der Messanordnung innerhalb des Messfeldes des Sensors befindet. Die Messposition bezeichnet die für den Sensor vorgesehene Position, um Messungen vorzunehmen, d. h. Messsignale innerhalb seines Messfeldes kapazitiv zu erfassen. Beispielsweise kann ein lösbares Anbringen des Sensors an der Oberfläche mittels einer Halteeinrichtung, die auch als Bestandteil des Sensors ausgebildet sein kann, erfolgen. Die Messanordnung kann z. B. ein Behältnis umfassen, an dessen Oberfläche der Sensor angebracht wird, wobei die Oberfläche z. B. eine Wandfläche oder eine Bodenfläche des Behältnisses, insbesondere eine äußere Wandfläche bzw. Bodenfläche, oder auch eine Bodenfläche eines Raumes sein kann.

Nachdem der Sensor an der Oberfläche der Messanordnung angebracht worden ist und seine Messposition eingenommen hat bzw. sich in dieser befindet, erfolgt gemäß Block D der Figur 1 bei sich in der Messposition befindlichem Zustand des Sensors und bei fehlendem Messobjekt innerhalb des Messfeldes ein Ermitteln eines Einstellwerts R_{E} durch kapazitives Erfassen und Auswerten eines zweiten Messsignals mittels der Messelektronik sowie ein Speichern des ermittelten Einstellwerts R_{E} in der Messelektronik, wobei der Einstellwert R_{E} größer als der Kalibrierwert R₀ ist. Der Einstellwert R_{E} entspricht somit einem Referenzwert bezogen auf die Messposition des Sensors, wobei sich kein Messobjekt innerhalb des Messfeldes des Sensors befindet. Der Einstellwert R_{E} ist aufgrund einer, durch den sich innerhalb des Messfeldes befindlichen Bestandteil der Messanordnung bedingten, Einflussgröße größer als der Kalibrierwert R₀. D. h. der Bestandteil der Messanordnung befindet sich aufgrund der Einbauposition des Sensors innerhalb des Messfeldes und verursacht eine positive Änderung der Messsignale bzw. der Messwerte des Sensors. Der Bestandteil der Messanordnung ist insbesondere dielektrisch oder leitfähig und kann beispielsweise die Oberfläche der Messanordnung, an welcher der Sensor angebracht ist, umfassen.

Basierend auf den ermittelndem Kalibrierwert R₀ und dem ermittelten Einstellwert R_{E} wird in Block E der Figur 1 ein Schwellwert S durch die Messelektronik festgelegt, der durch einen zwischen dem Kalibrierwert R₀ und dem Einstellwert R_{E} liegenden Wert definiert wird. Dieses Festlegen kann z. B. in Abhängigkeit von einer zwischen dem Einstellwert R_{E} und dem Kalibrierwert R₀ vorliegenden Differenz erfolgen.

Die für die Auswertung von Messsignalen benötigten Parameter, die den Kalibrierwert R₀, den Einstellwert R_{E} und den Schwellwert S umfassen, stehen nun fest. Gemäß Block F erfolgt ein Aktivieren bzw. Starten eines Messvorgangs zum Detektieren des Messobjekts innerhalb des Messfeldes bei sich in der Messposition befindlichem Sensor. Entsprechend erfolgt gemäß Block G der Figur 1 ein kapazitives Erfassen und Auswerten eines dritten Messsignals mittels der Messelektronik. Insbesondere erfolgt dieses kapazitive Erfassen in regelmäßigen zeitlichen Abständen oder auch kontinuierlich. Die Messelektronik ermittelt einen Messwert, der dem ausgewerteten erfassten dritten Messsignal entspricht, und vergleicht diesen Messwert mit dem festgelegten Schwellwert und insbesondere auch mit dem Einstellwert R_{E}. Wird im Rahmen des Auswertens des erfassten dritten Messsignals durch die Messelektronik des Sensors festgestellt, dass dieses ausgewertete erfasste dritte Messsignal einem Messwert M entspricht, der kleiner als der festgelegte Schwellwert S oder gleich dem festgelegten Schwellwert S ist, was durch die Rechenvorschrift M ≤ S in Figur 1 symbolisiert ist, so erfolgt gemäß Block H2 der Figur 1 ein Ausgeben eines Warnsignals, und zwar z. B. auf Veranlassung der Messelektronik. Z. B. kann das Ausgeben des Warnsignals durch ein Anzeigen des Warnsignals mittels einer Anzeigeeinrichtung des Sensors erfolgen, in Figur 1 dargestellt durch Block I. Ergänzend oder alternativ kann das Warnsignal als akustisches Warnsignal von dem Sensor ausgegeben werden. Weiterhin kann ergänzend oder alternativ vorgesehen sein, das Warnsignal über einen separaten Sensor-Ausgang auszugeben, z. B. als elektronisches Signal. Das Warnsignal deutet darauf hin, dass sich der Sensor aktuell nicht bzw. nicht mehr in der Messposition bzw. in seiner korrekten Montageposition befindet, sondern sich von dieser entfernt, z. B. gelöst, hat. Das Warnsignal wird daher als ein aktuell vorliegender Einbaufehler bzw. Montagefehler des Sensors gewertet und entsprechend ausgegeben.

Wird im Rahmen des Auswertens des erfassten dritten Messsignals durch die Messelektronik des Sensors hingegen festgestellt, dass dieses ausgewertete erfasste dritte Messsignal einem Messwert M entspricht, der größer als der ermittelte Einstellwert R_{E} ist, was durch die Rechenvorschrift M > R_{E} in Figur 1 symbolisiert ist, so wird ein Messobjekt detektiert und das erfasste dritte Messsignal wird insbesondere in Form eines Leckage-Messsignals oder eines Füllstands-Messsignals ausgegeben, z. B. mittels einer von dem Sensor umfassten Anzeigeeinrichtung oder als elektronisches Signal über einen entsprechenden Sensorausgang. Liegt der dem ausgewerteten erfassten dritten Messsignal entsprechende Messwert M in einem Wertebereich, der größer als der festgelegte Schwellwert S und kleiner als der ermittelte Einstellwert R_{E} oder gleich dem ermittelten Einstellwert R_{E} ist, so wird dieses Messergebnis von der Messelektronik als ein fehlendes Vorhandensein des Messobjekts innerhalb des Messfeldes interpretiert und zudem so gewertet, dass aktuell kein Einbaufehler bzw. Montagefehler des Sensors vorliegt. Dies ist durch den in Figur 1 gezeigten Block H3 veranschaulicht. Erst bei Erreichen und/oder Unterschreiten des festgelegten Schwellwerts S erfolgt das Ausgeben eines Warnsignals gemäß Block H2. Der Wertebereich zwischen dem Einstellwert R_{E} und dem Schwellwert S kann somit insbesondere als Toleranzbereich bzw. Fehlertoleranzbereich betrachtet werden.

Das jeweilige kapazitive Erfassen des ersten, des zweiten und des dritten Messsignals kann insbesondere ein kapazitives Erfassen einer jeweiligen Mehrzahl von ersten, zweiten und dritten Messsignalen umfassen, wobei diese jeweilige Mehrzahl von der Auswerteeinheit ausgewertet wird. In diesem Fall kann das Festlegen des Schwellwerts S basierend auf der Mehrzahl von erfassten ersten und zweiten Messsignalen erfolgen, z. B., indem ein gemittelter Kalibrierwert R₀ basierend auf der Mehrzahl von erfassten ersten Messsignalen und ein gemittelter Einstellwert R_{E} basierend auf der Mehrzahl von erfassten zweiten Messsignalen ermittelt wird, anhand derer die Festlegung des Schwellwerts erfolgt. Alternativ kann auch ein Festlegen mehrerer Schwellwerte S; basierend auf der Mehrzahl von erfassten ersten und zweiten Messsignalen erfolgen, und zwar insbesondere derart, dass ein jeweiliger Schwellwert Sᵢ basierend auf jeweils einem erfassten ersten und zweiten Messsignal der Mehrzahl von erfassten ersten und zweiten Messsignalen festgelegt wird. D. h. es kann pro Messkanal des Sensors ein jeweiliger Schwellwert festgelegt werden. Dies kann insbesondere im Falle einer aktiven Fläche des Sensors, die ein Array aus Messelektroden umfasst, von Vorteil sein, da dadurch eine örtlich aufgelöste Analyse der Messwerte erfolgen kann.

Die zuvor beschriebene jeweilige Mehrzahl von ersten, zweiten und dritten Messsignalen kann insbesondere dadurch erfasst werden, dass die aktive Fläche des Sensors eine Mehrzahl von Messelektroden besitzt, wobei an jeweils eine der Mehrzahl von Messelektroden ein Messpotential mittels der Messelektronik angelegt wird, insbesondere abwechselnd und durch Ansteuerung einer von dem Sensor umfassten Schalteinrichtung. Dadurch ergibt sich eine Mehrzahl von Messkanälen des Sensors, wobei pro Messelektrode bzw. Messkanal ein jeweiliges erstes, zweites und drittes Messsignal erfasst wird. Alternativ oder auch ergänzend kann die Erfassung der Mehrzahl von entsprechenden Messsignalen auch dadurch erfolgen, dass die aktive Fläche des Sensors eine Mehrzahl von Gegenelektroden aufweist und an jede der Mehrzahl von Gegenelektroden entweder jeweils ein Schirmpotential oder ein Anregungspotential mittels der Messelektronik angelegt wird, z. B. durch Ansteuerung einer von dem Sensor umfassten Schalteinrichtung. Demnach ergeben sich bei einer Anordnung mit n Gegenelektroden insgesamt 2" Messkanäle bzw. verschiedene Messwerte. Die jeweiligen Messwerte der einzelnen Messkanäle können mathematisch miteinander verrechnet und zur Ermittlung eines oder mehrerer einzelner Kalibrierwerte, eines oder mehrerer einzelner Einstellwerte R_{E} bzw. R_{E,i} und somit zum Festlegen eines oder mehrerer Schwellwerte herangezogen werden.

Das in Figur 1 veranschaulichte Verfahren zeichnet sich insbesondere dadurch aus, dass ein Kalibrierwert R₀ und zusätzlich dazu ein Einstellwert R_{E} ermittelt werden. D. h. bevor der Messvorgang zum Detektieren eines Messobjekts erfolgt, werden zunächst zwei voneinander verschiedene Referenzwerte bestimmt, von denen sich ein erster Referenzwert bzw. der Kalibrierwert R₀ auf einen ersten Zustand des Sensors bezieht, in welchem der Sensor sich nicht in der Messposition befindet, und sich ein zweiter Referenzwert bzw. der Einstellwert R_{E} auf einen zweiten Zustand des Sensors bezieht, in welchem der Sensor sich in der Messposition befindet. Die Messposition des Sensors entspricht der Position des Sensors, die der Sensor nach ordnungsgemäßem Anbringen an der Oberfläche der Messanordnung einnimmt. Das Ermitteln dieser zwei Referenzwerte, d. h. des Kalibrierwerts R₀ und des Einstellwerts R_{E}, dient insbesondere dazu, dass während des Messvorgangs zum Detektieren des Messobjekts überprüft bzw. überwacht werden kann, ob sich der Sensor weiterhin in seiner Messposition befindet oder ob der Sensor seine vorgesehene Messposition verlassen hat und demzufolge ein Montagefehler bzw. Einbaufehler vorliegt.

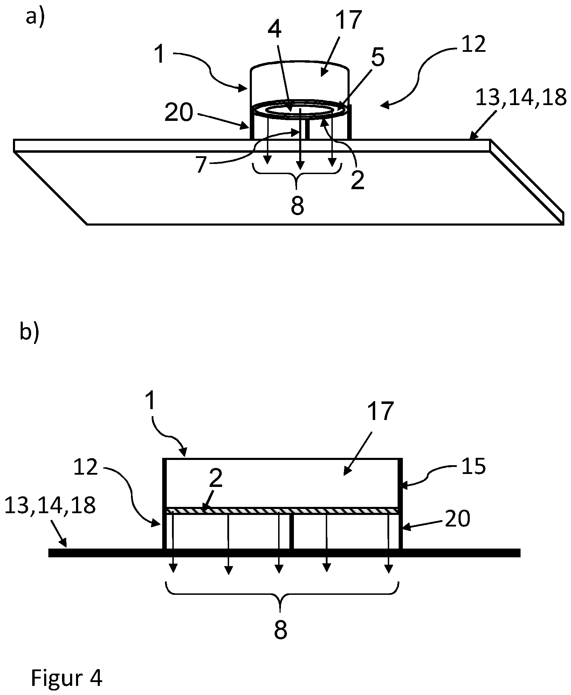

Figur 2 zeigt eine perspektivische Ansicht a) und eine Seitenansicht b) auf einen, zweckmäßig das erfindungsgemäße Verfahren in einer Messanordnung 12 durchführenden Sensor 1 gemäß einer ersten Ausführungsform der Erfindung. Der Sensor gemäß Figur 2 ist beispielhaft als kapazitiver Näherungssensor ausgebildet und ist zum Detektieren eines Messobjekts in einer Messanordnung 12, und zwar zum Durchführen des gemäß Figur 1 gezeigten und zuvor beschriebenen Verfahrens eingerichtet. In Figur 2 ist der Sensor beispielhaft dazu ausgebildet, einen Füllstand innerhalb eines Behälters 16 kapazitiv zu erfassen, wobei das zu detektierende Messobjekt einem Füllgut entspricht. Wie in Figur 2b) veranschaulicht, weist der Sensor 1 eine Messelektronik 3 zum Erzeugen eines räumlichen Messfeldes 8 sowie zum Detektieren eines Messobjekts, insbesondere zum kapazitiven Erfassen eines sich im Behälter 16 befindlichen Füllguts, innerhalb des Messfeldes 8 auf. Die Messelektronik 3 umfasst eine aktive Fläche 2, die mindestens eine Messelektrode 4 und mindestens eine Gegenelektrode 5 aufweist. Im dargestellten Ausführungsbeispiel der Figur 2 weist die aktive Fläche 2 gemäß der unter a) gezeigten perspektivischen Ansicht eine Messelektrode 4 und eine Mehrzahl von Gegenelektroden 5, und zwar beispielhaft drei Gegenelektroden 5, auf. Das räumliche Messfeld 8 des Sensors 1 erstreckt sich im Wesentlichen quer zur aktiven Fläche 2 und von der aktiven Fläche 2 ausgehend, was durch den mit Bezugszeichen 7 versehenen Pfeil zur Kenntlichmachung der Wirkrichtung des Messfelds in Figur 2 veranschaulicht ist. Zudem umfasst die Messelektronik 3 eine Auswerteeinheit 6 zum Auswerten eines von der mindestens einen Messelektrode 4 erfassten Messsignals. Der Sensor 1 ist an einer Oberfläche 13 der Messanordnung 12 lösbar anbringbar, und zwar zum Messen in einer Messposition 15, in welcher sich ein Bestandteil 14 der Messanordnung 12 innerhalb des Messfeldes 8 des Sensors 1 befindet. Der Bestandteil 14 der Messanordnung 12 ist insbesondere dielektrisch oder leitfähig und kann z. B. die Oberfläche der Messanordnung, an welcher der Sensor angebracht ist, umfassen. Im Ausführungsbeispiel der Figur 2 entspricht dieser Bestandteil 14 der Oberfläche 13 der Messanordnung 12, an welcher der Sensor zum Einnehmen der Messposition 15 anzubringen ist. Der Bestandteil 14 der Messanordnung 12 muss grundsätzlich nicht zwingend die Oberfläche 13 der Messanordnung 12 umfassen, sondern kann auch ein von der Oberfläche der Messanordnung verschiedener Bestandteil der Messanordnung sein, wie z. B. in Figur 4 gezeigt. Gemäß Figur 2 umfasst die Messanordnung 12 das Behältnis 16 und den Sensor 1, der an der als Wandfläche 16a des Behältnisses 16 ausgebildeten Oberfläche 13 der Messanordnung 12 angebracht ist, wobei diese Wand 16a in Figur 2 dielektrisch ausgebildet ist.

In der Messelektronik 3 des Sensors 1 ist ein Kalibrierwert speicherbar oder bereits gespeichert. In Figur 2 ist der Kalibrierwert bereits gespeichert und basiert auf den jeweiligen ersten Messsignalen, die von der Messelektrode 4 der aktiven Fläche 2 in einem nicht in der Messposition befindlichen Zustand des Sensors 1 erfasst und mittels der Auswerteelektronik ausgewertet worden ist. Gemäß Figur 2 basiert der Kalibrierwert beispielhaft auf mindestens einem der jeweils erfassten ersten Messsignale, die sich aus den Messkanälen je nach Schaltungszustand der jeweiligen Gegenelektroden 5 als Anregungselektrode oder als Schirmelektrode ergeben. Wie bei einer Kalibration üblich, ist die Erfassung der ersten Messsignale erfolgt, während die aktive Fläche 2 des Sensors 1 einer Atmosphäre bzw. allgemein einer Umgebung ausgesetzt war, der der Sensor 1 auch bei seinem Messvorgang zum Detektieren eines Messobjekts ausgesetzt sein wird. Im Ausführungsbeispiel der Figur 2 ist diese Atmosphäre Umgebungsluft, kann aber auch in einer weiteren Ausführungsform eine Gasatmosphäre oder auch ein Vakuum sein. Ferner ist in der Messelektronik 3 des Sensors 1 ein Einstellwert speicherbar oder bereits gespeichert. In Figur 2 ist der Einstellwert bereits gespeichert. Der Einstellwert basiert auf einer Anzahl von jeweiligen zweiten Messsignalen, die sich aus der jeweiligen Anzahl von Messkanälen je nach Schaltungszustand der jeweiligen Gegenelektroden 5 als Anregungselektrode oder als Schirmelektrode ergeben, wobei die zweiten Messsignale mit Hilfe der Gegenelektroden 5 der aktiven Fläche 2 in einem in der Messposition befindlichen Zustand des Sensors 1 bei fehlendem Messobjekt innerhalb des Messfeldes 8 erzeugt und mittels der Messelektrode 4 erfasst sowie mittels der Auswerteelektronik ausgewertet worden sind. Im konkreten Ausführungsbeispiel der Figur 2 basiert der gespeicherte Einstellwert somit auf den, von den drei Messelektroden 4 jeweils erfassten, zweiten Messsignalen, und zwar beispielhaft auf einem Mittelwert der erfassten zweiten Messsignale. Aufgrund einer durch den Bestandteil 14 der Messanordnung 12, der sich bei von dem Sensor 1 eingenommener Messposition 15 innerhalb des Messfeldes 8 des Sensors 1 befindet, bedingten Einflussgröße ist der Einstellwert größer als der Kalibrierwert. Die Messelektronik 3 des Sensors 1 ist dazu eingerichtet, basierend auf dem Kalibrierwert und dem Einstellwert einen Schwellwert derart festzulegen, dass dieser durch einen zwischen dem Kalibrierwert und dem Einstellwert liegenden Wert definiert ist, und zwar insbesondere in Abhängigkeit von einer zwischen dem Einstellwert und dem Kalibrierwert vorliegenden Differenz.

Der Sensor 1 ist gemäß Figur 2 dazu eingerichtet, einen Messvorgang zum Detektieren eines Messobjekts innerhalb des Messfeldes 8 bei sich in der Messposition befindlichem des Sensors 1 zu starten sowie mittels der Messelektronik 3 zumindest ein drittes Messsignal, und zwar zumindest eine Anzahl von dritten Messsignalen entsprechend der Anzahl der von der aktiven Fläche 2 umfassten Gegenelektroden 5, kapazitiv zu erfassen und mittels der Auswerteelektronik 6 auszuwerten. Ein entsprechender Messvorgang ist in Figur 2 dargestellt, wobei sich in Figur 2 jedoch kein Messobjekt innerhalb des Messfeldes 8 des Sensors 1 befindet. Auch wenn dies aus Figur 2 nicht ersichtlich ist, so ist der Sensor ferner dazu eingerichtet, ein Warnsignal auszugeben für den Fall, dass das von der Messelektronik 3 ausgewertete erfasste dritte Messsignal einem Messwert entspricht, der kleiner als der festgelegte Schwellwert oder gleich dem festgelegten Schwellwert ist. Wie bereits erwähnt, erfasst der in Figur 2 gezeigte beispielhafte Sensor 1 aufgrund seiner drei von der aktiven Fläche 2 umfassten Gegenelektroden 5 zumindest ein Messsignal, und zwar jeweils ein drittes Messsignal eines jeweiligen Messkanals von maximal acht, sich aus dem jeweiligen Schaltungszustand der drei Gegenelektroden 5 als Anregungselektrode oder als Schirmelektrode ergebenden Messkanälen mittels der Messelektrode 4, und wertet die entsprechenden dritten Messsignale mittels der Auswerteeinheit 6 aus. Die erfassten dritten Messsignale können dabei jeweils einzeln mit dem zuvor entsprechend festgelegten Schwellwert, und auch insbesondere mit dem zuvor entsprechend ermittelten Einstellwert, verglichen werden. Alternativ kann eine Anzahl der jeweiligen erfassten dritten Messsignale oder eine Kombination von erfassten dritten Messsignalen, bei welcher beispielsweise eine Anzahl der erfassten dritten Messsignale mathematisch miteinander verrechnet wird, mit einer Anzahl festgelegter Schwellwerte, und auch insbesondere mit einer Anzahl von zuvor ermittelten Einstellwerten, verglichen werden. Wie bereits hinsichtlich des in Figur 1 gezeigten Verfahrens beschrieben, hat der Sensor 1 somit eine in dem Sensor 1 integrierte Selbstüberwachungsfunktion hinsichtlich seiner Einbauposition. Der Sensor 1 kann selbst überprüfen, ob seine aktuelle Position noch der vorbestimmten Messposition entspricht. Ist dies nicht bzw. nicht mehr der Fall, d. h. befindet sich der Sensor 1 während eines Messvorgangs aktuell nicht bzw. nicht mehr in der zur Messung vorgesehenen Messposition, so gibt er ein entsprechendes Warnsignal aus. Dieses Warnsignal signalisiert ein Abweichen des Sensors 1 von der vorgesehenen Messposition 15, und somit einen vorliegenden Montagefehler bzw. Einbaufehler. Der Messvorgang kann daraufhin nach Ausgeben des Warnsignals abgebrochen werden, um den Einbaufehler zu beheben.

Im Normalfall, d. h. im ordnungsgemäßen Betrieb des Sensors 1, erfasst der Sensor 1 ein drittes Messsignal oder auch mehrere dritte Messsignale, die jeweils einem Messwert entsprechen, der größer als der festgelegte Schwellwert ist. Ist ein jeweiliges erfasstes drittes Messsignal auch größer als der Einstellwert, so detektiert der Sensor ein Messobjekt, welches gemäß Figur 2 einem innerhalb des Behälters befindlichen Füllgut entspricht, und kann anhand der Anzahl von erfassten dritten Messsignalen einen Füllstand berechnen. Das erfasste dritte Messsignal bzw. die Anzahl der erfassten dritten Messsignale kann von dem Sensor 1 gemäß Figur 2 in Form eines Füllstands-Messsignals ausgegeben werden, z. B. mittels einer von dem Sensor 1 umfassten Anzeigeeinrichtung 9 oder als elektronisches Signal über einen Sensorausgang. Gemäß Figur 2 befindet sich kein Füllgut in dem Behältnis 16, und somit auch kein Messobjekt innerhalb des Messfeldes 8 des Sensors 1. Somit entspricht das jeweils erfasste dritte Messsignal im Wesentlichen, d. h. unter Berücksichtigung von Fehlertoleranzen, dem Einstellwert. Der Sensor erkennt daher im Rahmen seiner Selbstüberwachungsfunktion, dass er sich in der vorgesehenen Messposition befindet und dass kein Einbaufehler bzw. Montagefehler vorliegt, und setzt den Messvorgang fort.

Der in den Figuren 4-9 jeweils gezeigte Sensor 1 entspricht hinsichtlich seiner Funktionsmerkmale und seiner Arbeits- bzw. Funktionsweise in bevorzugter Ausbildung im Wesentlichen dem in Figur 2 veranschaulichten Sensor. Auf eine Darstellung des inneren Aufbaus des Sensors 1 wurde in Figuren 4-9 daher verzichtet, wobei die gleichen Bezugszeichen für gleiche Merkmale verwendet werden. Die in

Figuren 2 und 4-9 jeweils gezeigten Sensoren 1 unterscheiden sich im Wesentlichen im Hinblick auf ihre Anwendung bzw. ihr Einsatzgebiet, und somit in ihrem jeweiligen Einbau und ihren eingenommenen Messpositionen. Ferner können sich die Sensoren insbesondere jeweils in der Anzahl der von der aktiven Fläche jeweils umfassten Messelektroden 4 und Gegenelektroden 5 sowie hinsichtlich des Vorhandenseins einer Schalteinrichtung unterscheiden.

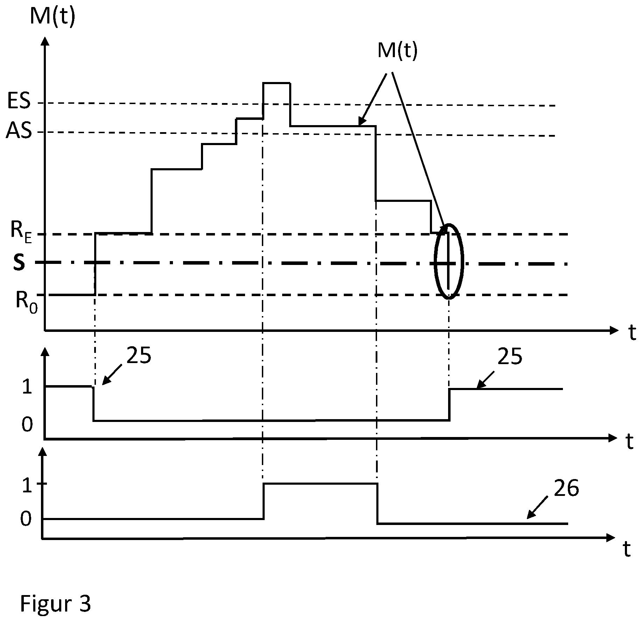

Figur 3 stellt ein Diagramm zum zeitlichen Verlauf des Verfahrens gemäß einer Ausführungsform der Erfindung dar. Dargestellt ist der Verlauf eines im Rahmen des kapazitiven Erfassens eines dritten Messsignals ausgewerteten Messwertes M(t) über die Zeit t. Im Diagramm der Figur 3 sind ferner der ermittelte Kalibrierwert R₀, der ermittelte Einstellwert R_{E} sowie der basierend auf dem Kalibrierwert R₀ und dem Einstellwert R_{E} festgelegte Schwellwert S als entsprechende Geraden eingezeichnet. Sobald sich der Sensor in der vorgesehenen Messposition befindet, kann der Messvorgang aktiviert bzw. gestartet werden. Nach einer kurzen Anschaltdauer, während welcher der Messwert M (t) zunächst aufgrund des Einschaltvorgangs noch unterhalb des Schwellwerts S liegt, wird ein Warnsignal 25 ausgegeben. Der Messwert M(t) steigt daraufhin zunächst auf einen Wert, der dem Einstellwert R_{E} entspricht. Befindet sich in der vom Sensor eingenommenen Messposition ein Messobjekt innerhalb des Messfeldes des Sensors, so steigt der Messwert M(t) auf einen Wert, der größer als der Einstellwert R_{E} ist. Überschreitet der Messwert M(t) die Einschaltschwelle ES des Sensors, so wird ein Schaltsignal 26 ausgegeben und die erfassten dritten Messsignale werden anwendungsspezifisch im Rahmen des Messvorgangs zum Detektieren des Messobjekts ausgewertet. Unterschreitet der Messwert M(t) die Ausschaltschwelle AS des Sensors, so wird kein entsprechendes Schaltsignal 26 mehr ausgegeben und die erfassten dritten Messsignale werden nicht mehr ausgewertet. Das Ausgeben des Schaltsignals 26 ist somit von der Einschaltschwelle ES und der Ausschaltschwelle AS des Messsignals abhängig, wobei die Einschaltschwelle ES und die Ausschaltschwelle AS vorab je nach Anwendungsfall definiert werden müssen. Befindet sich der Sensor nicht mehr in der vorgesehenen Messposition, z. B. weil er sich von der Oberfläche der Messanordnung gelöst hat, so verringert sich der Anteil des sich innerhalb des Messfeldes des Sensors befindlichen Messobjekts und des Bestandteils der Messanordnung. Infolgedessen fällt der von dem Sensor ermittelte Messwert M(t) unter den Einstellwert R_{E} und schließlich auch unter den Schwellwert S. Das Erreichen und Unterschreiten des Schwellwerts S durch den Messwert M(t) ist in Figur 3 mit einer ovalen Markierung kenntlich gemacht. Stellt der Sensor das Erreichen und Unterschreiten des Schwellwerts S durch den Messwert M(t) fest, so gibt er ein Warnsignal 25 aus, wie im unteren Bereich des Diagramms der Figur 3 zu sehen ist.

Figur 4 zeigt eine perspektivische Ansicht a) und eine Seitenansicht b) auf einen weiteren, zweckmäßig das erfindungsgemäße Verfahren in einer Messanordnung 12 durchführenden Sensor 1 gemäß einer zweiten Ausführungsform der Erfindung. Die grundsätzliche Arbeitsweise des in Figur 4 gezeigten Sensors 1 und das mittels des Sensors 1 durchgeführte Verfahren entsprechen den Ausführungen zu Figuren 1 bis 3. Der in Figur 4 gezeigte Sensor 1 unterscheidet sich von dem in Figur 2 gezeigten Sensor im Wesentlich dadurch, dass seine aktive Fläche 2 genau eine Messelektrode 4 und genau eine Gegenelektrode 5 umfasst und dass der Sensor 1 keine Schalteinrichtung aufweist. Somit steht zur kapazitiven Erfassung von Messsignalen nur ein Messkanal zur Verfügung. Der Kalibrierwert, der Einstellwert sowie ferner auch der Messwert, der dem erfassten dritten Messsignal entspricht, kann jeweils optional basierend auf einer Mehrzahl von, z. B. innerhalb eines bestimmten Zeitraums, erfassten ersten, zweiten und dritten Messsignalen ermittelt werden, z. B., indem ein Mittelwert aus der Mehrzahl von erfassten ersten, zweiten und dritten Messsignalen bestimmt und zum Ermitteln des Kalibrierwerts, des Einstellwerts und/oder des Messwerts herangezogen wird.

Der in Figur 4 gezeigte Sensor 1 wird zur Erkennung einer Leckage eingesetzt. Allgemein betrachtet kann aus einer Leckage Materie in Form von Feststoffen, Flüssigkeiten oder Gasen austreten. Im Ausführungsbeispiel der Figur 4 ist das zu detektierende Messobjekt eine aus einer Leckagestelle austretende Flüssigkeit, die auf den Boden eines Raumes gelangen und sich auf der Bodenfläche 18 ansammeln kann. Zu deren Erkennung wird der Sensor 1 mittels einer separaten, und somit nicht als Bestandteil des Sensors 1 ausgebildeten, Halteeinrichtung 20 an einer, in Figur 4 als Bodenfläche 18 ausgebildeten Oberfläche 13 der Messanordnung 12 lösbar angebracht, sodass die, die aktive Fläche 2 umfassende Stirnfläche des Sensors 1 in der Messposition 15 zu der Bodenfläche 18 gegenüberliegend und in einem definierten Abstand von der Bodenfläche 18 beabstandet angeordnet ist. Beispielsweise kann die Halteeinrichtung 20 auf dem Boden des Raumes platziert werden und der Sensor 1 kann z.B. auf der Halteeinrichtung 20 aufsitzend an diese angebracht werden. Es versteht sich von selbst, dass das Messfeld 8 des Sensors 1 mittels der Messelektronik so erzeugt wird, dass das Messfeld 8 sich von der aktiven Fläche 2 ausgehend bis hin zur Bodenfläche 18 und über diese etwas hinausgehend erstreckt, sodass sich die Bodenfläche 18 und ein sich möglicherweise auf der Bodenfläche 18 befindliches Messobjekt innerhalb des Messfeldes 8 befinden und von dem Sensor 1 messtechnisch erfassbar sind. Gemäß Figur 4 befindet sich jedoch noch kein Messobjekt bzw. keine Flüssigkeit innerhalb des Messfeldes 8 des Sensors 1. Im Unterschied zu Figur 2 stellt der sich innerhalb des Messfeldes 8 befindliche Bestandteil 14 der Messanordnung 12 somit beispielhaft die Bodenfläche 18 eines Raumes dar und umfasst im Gegensatz zu Figur 2 nicht diejenige Oberfläche 13 der Messanordnung 12, an der der Sensor 1 zum Messen in der Messposition 15 angebracht ist.

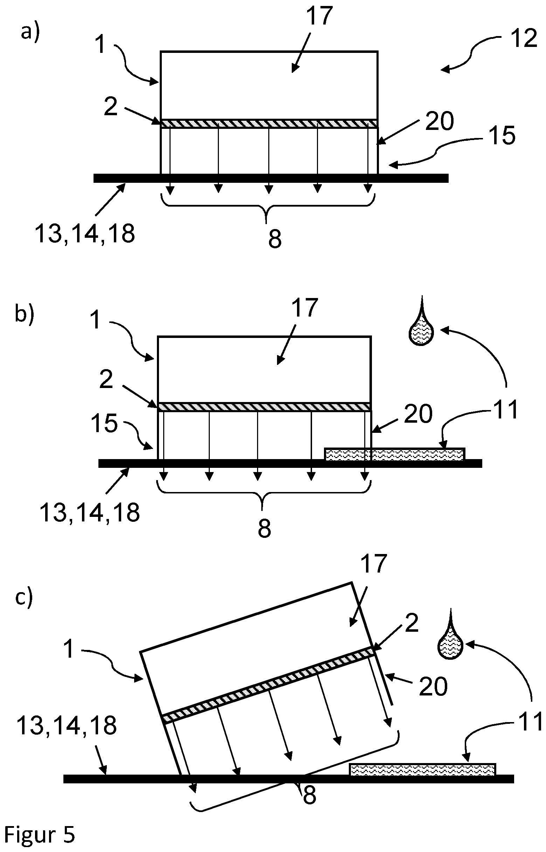

Figur 5 zeigt drei Seitenansichten a), b) und c) auf einen weiteren, zweckmäßig das erfindungsgemäße Verfahren in einer Messanordnung 12 durchführenden Sensor 1 gemäß einer dritten Ausführungsform der Erfindung. Der in Figur 5 gezeigte Sensor 1 entspricht dem in Figur 4 gezeigten Sensor hinsichtlich seiner Arbeits- und Funktionsweise. Entsprechend dient der Sensor 1 gemäß Figur 5 ebenfalls zur Erkennung einer Leckage bzw. zum Detektieren eines Messobjekts 11, das eine aus einer Leckagestelle austretende Flüssigkeit ist und von der Leckagestelle auf den Boden des Raumes gelangen und sich auf der Bodenfläche 18 ansammeln kann. Auch in Figur 5 ist der Sensor 1 beispielhaft mittels einer Halteeinrichtung 20 an einer Oberfläche 13 einer Messanordnung 12 angebracht und befindet sich in Figur 5 a) und b) in der Messposition 15. Die in Figur 5 gezeigte Messanordnung 12 unterscheidet sich von Figur 4 dadurch, dass der Sensor 1 zum Einnehmen der Messposition 15 mittels einer als Bestandteil des Sensorgehäuses 17 ausgebildeten, insbesondere geeignet ausgebildeten, Halteeinrichtung 20 an einer als Bodenfläche 18 des Raumes ausgebildeten Oberfläche 13 der Messanordnung 12 angebracht bzw. montiert wird. Die Bodenfläche 18 entspricht in Figur 5 dem Bestandteil 13 der Messanordnung 12 und befindet sich bei sich in der Messposition 15 befindlichem Sensor 1 innerhalb des Messfeldes 8 des Sensors 1 (siehe Figur 5 b)). Die Bodenfläche 18 ist insbesondere dielektrisch und bewirkt aufgrund von deren Präsenz innerhalb des Messfeldes 8 des Sensors 1, dass der Einstellwert größer als der Kalibrierwert des Sensors ist, wie bereits beschrieben. Das Erzeugen des Messfeldes 8 durch die Messelektronik des Sensors 1 erfolgt dabei selbstverständlich derart, dass sich das Messfeld 8 von der aktiven Fläche 2 ausgehend zumindest bis einschließlich zur Bodenfläche 18 und insbesondere über diese geringfügig hinausgehend erstreckt, wie in Figur 5 zu sehen ist.

Gemäß Figur 5 a) befindet sich der Sensor in der Messposition 15 und kein Messobjekt befindet sich innerhalb des Messfeldes des Sensors 1. Das von dem Sensor 1 erfasste dritte Messsignal entspricht daher einem Messwert, der im Wesentlichen dem Einstellwert entspricht. Gemäß Figur 5 b) befindet sich der Sensor 1 ebenfalls in der Messposition 15 und eine Flüssigkeit hat sich aufgrund einer Leckage eines oberhalb des Sensors angeordneten Behältnisses (in Figur 5 der Übersichtlichkeit halber nicht zu sehen) auf der Bodenfläche 18 angesammelt. Da sich die dem zu detektierenden Messobjekt 11 entsprechende Flüssigkeit innerhalb des Messfeldes 8 des Sensors 1 befindet, wird im Rahmen des kapazitiven Erfassens eines dritten Messsignals festgestellt, dass der aus dem erfassten dritten Messsignal resultierende Messwert größer als der Einstellwert ist. Entsprechend wird das erfasste dritte Messsignal als ein Leckage-Messsignal ausgegeben. In Figur 5c) ist zu sehen, dass sich der Sensor 1 im Gegensatz zu Figur 5 a) und 5 b) nicht mehr in der Messposition, und somit nicht mehr in der vorgesehenen Einbauposition befindet. Das zu detektierende Messobjekt 11 bzw. die Leckage-Flüssigkeit befindet sich aufgrund der veränderten Position des Sensors 1 nicht mehr innerhalb des Messfeldes 8 des Sensors 1. Entsprechend erfasst der Sensor 1 ein drittes Messsignal, das einem Messwert entspricht, der verglichen zu dem im Zustand des Sensors 1 gemäß Figur 5 b) ausgewerteten Messwert eine negative Messwertänderung erfährt, den Schwellwert erreicht und diesen unterschreitet. Der Sensor 1 erkennt dies mittels seiner Auswerteeinheit und gibt ein Warnsignal aus, wie bereits beschrieben, um zu signalisieren, dass ein Einbaufehler des Sensors 1 vorliegt.

Beispielsweise kann der Sensor gemäß den in Figuren 4 und 5 gezeigten Ausführungsbeispielen auch über oder vor einer Bodenfläche montiert sein, und zwar insbesondere mittels einer Halteeinrichtung, wobei die Bodenfläche eine metallische Bodenfläche ist, welche zudem insbesondere elektrisch-leitend geerdet sein kann.

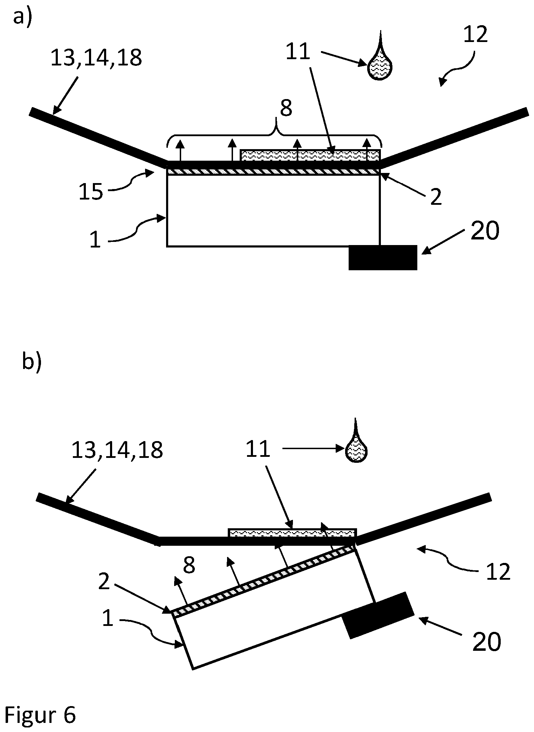

Figur 6 stellt zwei Seitenansichten a) und b) auf einen weiteren, zweckmäßig das erfindungsgemäße Verfahren in einer Messanordnung 12 durchführenden Sensor 1 gemäß einer vierten Ausführungsform der Erfindung dar. Der Sensor 1 ist in Figur 6 a) unmittelbar, d. h. mit einer Fläche des Sensors 1 direkt an einer Oberfläche 13 einer Messanordnung 12 angebracht, und zwar insbesondere unter Verwendung einer optionalen separaten Halteeinrichtung 20, und befindet sich in der Messposition 15 zum Detektieren eines Messobjekts 11. Die Halteeinrichtung 20 kann auf verschiedene Weise ausgebildet sein und muss lediglich dazu geeignet sein, den Sensor 1 an der Oberfläche 13 der Messanordnung 12, und zwar insbesondere lösbar, anzubringen und ihn in der Messposition zu halten. Beispielsweise kann die Halteeinrichtung 20 ein Teil einer Wand oder eines Bodens sein oder anstatt einer mechanischen Halteeinrichtung auch z.B. in Form eines Klebstoffs oder Klebepads zum flächigen Anbringen des Sensors 1 an der Oberfläche 13 der Messanordnung 12 ausgebildet sein. In einer weiteren Ausführungsform kann die Halteeinrichtung beispielsweise als Bestandteil des Sensors 1 ausgebildet sein, z.B. in Form von Saugnäpfen o.ä.. Die Oberfläche 13 der Messanordnung 12 ist als eine Bodenfläche 18, insbesondere als äußere Bodenfläche, eines als Wanne ausgebildeten Behältnisses 16 ausgebildet. Die Wanne kann z. B. als Auffangwanne zum Sammeln des zu detektierenden Messobjekts 11, das in Figur 6 einem aus einer Leckage austretenden Füllgut entspricht, ausgebildet sein. Wie in Figur 6 b) zu sehen, hat sich der Sensor 1 von der Oberfläche 13 der Messanordnung 12 bzw. der äußeren Bodenfläche 18 der Wanne gelöst und befindet sich nicht mehr in der Messposition 15 gemäß Figur 6 a). Sowohl der Bestandteil 14 der Messanordnung 12, der in Figur 6 der Bodenfläche 18 der Wanne entspricht, als auch das als Füllgut auf dem Wannenboden ausgebildete Messobjekt 11 befinden sich nur noch anteilsmäßig innerhalb des Messfeldes 8 des Sensors 1. Im Rahmen des Messvorgangs zum Detektieren des Messobjekts 11 stellt der Sensor somit fest, dass das erfasste dritte Messsignal einem Messwert entspricht, der, verglichen mit dem gemäß Figur 6 a) ausgewerteten Messwert, eine negative Messwertänderung erfahren hat. Sobald das erfasste dritte Messsignal einem Messwert entspricht, der gleich dem Schwellwert ist oder diesen unterschreitet, gibt der Sensor 1 folglich ein Warnsignal aus.

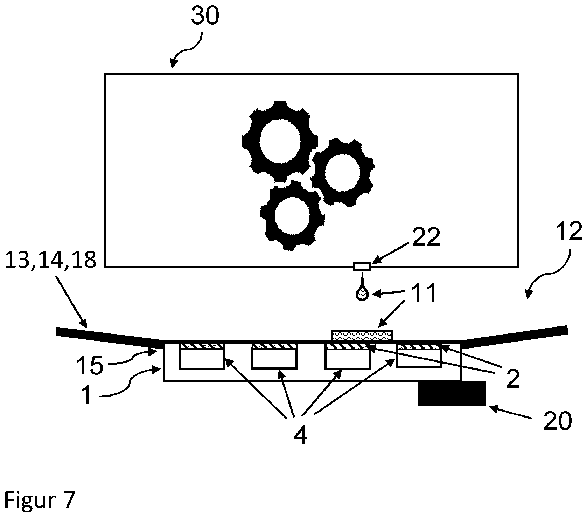

Figur 7 zeigt eine Seitenansicht auf einen weiteren, zweckmäßig das erfindungsgemäße Verfahren in einer Messanordnung 12 durchführenden Sensor 1 gemäß einer fünften Ausführungsform der Erfindung und beschreibt eine weitere Anwendungsmöglichkeit des Verfahrens und des Sensors gemäß der Erfindung. Dargestellt ist eine Maschine 30, die eine Leckagestelle 22 besitzt, aus welcher ungewünscht eine Flüssigkeit, z. B. Öl, austritt. Im Ausführungsbeispiel der Figur 7 ist die austretende Flüssigkeit das mittels des Sensors im Rahmen des Verfahrens zu detektierende Messobjekt 11. Zum Auffangen der Flüssigkeit befindet sich unterhalb der Maschine 30 ein Behältnis, z.B. eine Wanne. Als Alternative zu der in Figur 6 gezeigten Ausführungsform, bei der der Sensor an der äußeren Bodenfläche der Wanne zum Messen des Messobjekts 11 in der Messposition unmittelbar angebracht ist, ist der Sensor 1 gemäß Figur 7 in einer Aussparung bzw. Ausnehmung des Bodens der Wanne eingebracht und wird mittels einer in Figur 7 beispielhaft dargestellten separaten Halteeinrichtung 20, die nicht Bestandteil des Sensors 1 ist, in dieser Position gehalten. Der Sensor 1 ist so in die Aussparung des Wannenbodens eingebaut, dass die aktive Fläche 2 in Richtung der inneren Bodenfläche der Wanne gerichtet ist, um eine darauf befindliche Flüssigkeit als Messobjekt 11 zu detektieren. Folglich erstreckt sich das Messfeld des Sensors 1 von der aktiven Fläche 2 ausgehend in den Innenraum der Wanne. Ein Teilbereich des Bodens der Wanne befindet sich innerhalb des Messfeldes des Sensors 1, wenn dieser in die Aussparung eingebaut ist und sich in der Messposition befindet.

Der Sensor 1 weist gemäß Figur 7 eine aktive Fläche 2 auf, die eine Mehrzahl von Messelektroden 4 umfasst, wobei in Figur 7 der Übersichtlichkeit halber vier Messelektroden 4 dargestellt sind, jedoch auch insbesondere mehr Messelektroden vorhanden sein können. Die Mehrzahl der Messelektroden 4 sind in Form eines Elektroden-Arrays beispielhaft nebeneinander angeordnet. Der Sensor umfasst ferner eine in Figur 7 nicht gezeigte Schalteinrichtung, mittels welcher an jeweils eine der Mehrzahl von Messelektroden mittels der Messelektronik durch Ansteuerung der Schalteinrichtung ein Messpotential anlegbar ist, und zwar insbesondre abwechselnd an eine jede der Messelektroden, z. B. in jeweils vorbestimmten Zeitintervallen. Die Auswerteeinheit des Sensors 1 ist dazu eingerichtet, ein von jeder der Mehrzahl von Messelektroden erfasstes, jeweiliges erstes, zweites und drittes Messsignal auszuwerten. Mittels einer solchen Ausgestaltung der aktiven Fläche 2 wird ermöglicht, dass das Messobjekt 11 anhand der von der Mehrzahl der Messelektroden 4 jeweils erfassten dritten Messsignale mit einer verbesserten Ortsauflösung detektiert werden kann und zudem der Kalibrierwert und der Einstellwert basierend auf der Mehrzahl von jeweils erfassten ersten bzw. zweiten Messsignalen genauer ermittelt werden kann. Die aktive Fläche 2 des Sensors 1 umfasst ferner zumindest eine Gegenelektrode, und zwar in Figur 7 genau eine Gegenelektrode, die der Übersichtlichkeit halber nicht gezeigt ist. In einer weiteren Ausführungsform kann die aktive Fläche des Sensors optional auch eine Mehrzahl von Gegenelektroden aufweisen, wobei an jeder der Mehrzahl von Gegenelektroden mittels der Schalteinrichtung entweder ein Schirmpotential oder ein Anregungspotential anlegbar ist.

Entsprechend ist der in Figur 7 dargestellte Sensor 1 mittels seiner Messelektronik dazu eingerichtet, mittels der Messelektronik des Sensors 1 mehrere Schwellwerte basierend auf der Mehrzahl von erfassten ersten und zweiten Messsignalen festzulegen. Dies kann z. B. so erfolgen, dass ein jeweiliger Schwellwert basierend auf jeweils einem erfassten ersten und zweiten Messsignal der jeweiligen Mehrzahl, und demzufolge basierend auf jeweils einem Kalibrierwert und jeweils einem Einstellwert einer Mehrzahl von ermittelten Kalibrierwerten und ermittelten Einstellwerten festgelegt wird. Alternativ zur Festlegung mehrerer Schwellwerte kann aber auch vorgesehen sein, dass nur ein einziger Schwellwert basierend auf der Mehrzahl von erfassten ersten und zweiten Messsignalen festgelegt wird. Dies kann auf verschiedene Weise erfolgen, z. B. indem ein einziger Kalibrierwert und ein einziger Einstellwert, die beide zur Festlegung des Schwellwerts herangezogen werden, basierend auf der Mehrzahl von erfassten ersten bzw. zweiten Messsignalen ermittelt werden, insbesondere durch Mittelwertbildung eines Kalibrierwerts und eines Einstellwerts. Sollte der Sensor 1 ungewollt seine in Figur 7 gezeigte Einbauposition, und somit die Messposition, verlassen, kann dies anhand der mehreren Schwellwerte und der Mehrzahl von kapazitiv erfassten dritten Messsignalen mit einer Ortsauflösung, die auf der Geometrie des Messelektroden-Arrays basiert, festgestellt werden.

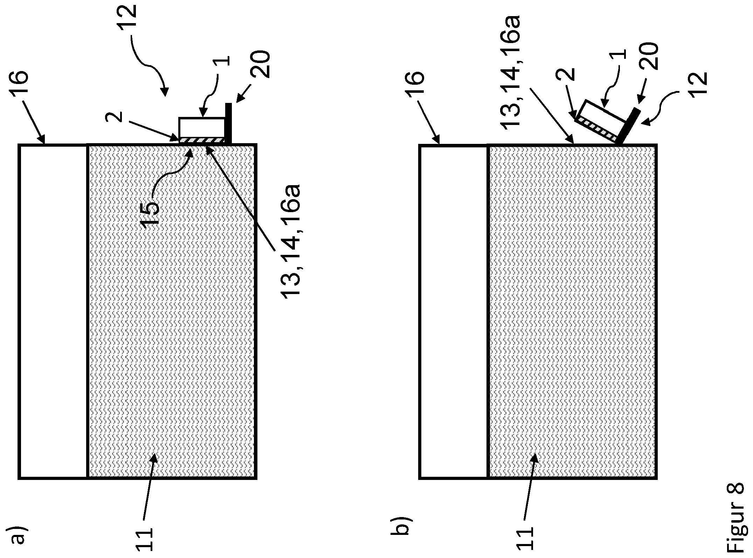

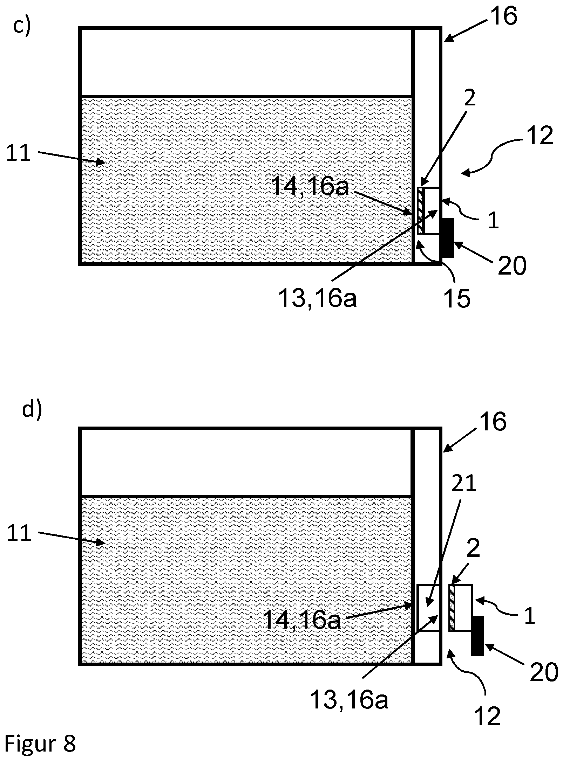

Figur 8 stellt vier Seitenansichten a), b), c) und d) auf einen weiteren, zweckmäßig das erfindungsgemäße Verfahren in einer Messanordnung 12 durchführenden Sensor 1 gemäß einer sechsten Ausführungsform der Erfindung dar. Der Sensor 1 umfasst eine aktive Fläche 2 mit mindestens einer Messelektrode und mindestens einer Gegenelektrode und entspricht hinsichtlich seines inneren Aufbaus und seiner Funktionsweise dem in Figur 2 beschriebenen Sensor. Gemäß Figur 8 a) ist der Sensor 1 mit seiner Stirnfläche, die die aktive Fläche 2 umfasst, an einer, als Wandfläche 16a eines Behältnisses 16, insbesondere als äußere Wandfläche, eines Behältnisses 16 ausgebildeten Oberfläche 13 einer Messanordnung 12 mittels einer Halteeinrichtung 20 lösbar angebracht und befindet sich in der Messposition 15. In Figuren 8 a) und b) ist die Halteeinrichtung 20 beispielhaft als ein an die Wandfläche 16a des Behältnisses 16 anzubringendes Halteelement ausgebildet und ist zudem beispielhaft ein Bestandteil des Sensors 1, wobei das Halteelement in einer weiteren Ausführungsform jedoch auch als separate Halteeinrichtung oder als ein Bestandteil des Behältnisses 16, z. B. in Form eines Vorsprungs, ausgebildet sein kann. Wie Figur 8 a) zu entnehmen ist, dient der Sensor 1 zum kapazitiven Erfassen eines Füllstands innerhalb des Behältnisses 16 bzw. des Behälters. Das von dem Sensor 1 im Rahmen des Messvorgangs zu detektierende Messobjekt 11 ist ein sich in dem Behältnis 16 befindliches Füllgut. Figur 8 a) zeigt einen ordnungsgemäßen Betrieb des Sensors 1, in dessen Messfeld sich zusätzlich zu dem Bestandteil 14 der Messanordnung 12, d. h. der, insbesondere dielektrischen oder leitfähigen, Wand des Behältnisses 16, auch das Messobjekt 11 befindet. Entsprechend wird im Rahmen des kapazitiven Erfassens und Auswertens eines jeweiligen dritten Messsignals festgestellt, dass der jeweils resultierende Messwert größer als der gespeicherte Einstellwert ist. Daraufhin erfolgt ein Ausgeben des jeweiligen dritten Messsignals in Form eines Füllstands-Messsignals, z. B. mittels einer in Figur 2 gezeigten Anzeigeeinrichtung 9 oder als elektronisches Signal über einen dafür vorgesehenen Sensor-Ausgang.

Gemäß Figur 8 c) ist der Sensor 1 mit seiner Stirnfläche, die die aktive Fläche 2 umfasst, an einer, als Wandfläche 16a eines Behältnisses 16, insbesondere als äußere Wandfläche ausgebildeten Oberfläche 13 einer Messanordnung 12 in einer Ausnehmung 21 einer Seitenwand des Behältnisses 16 lösbar angebracht und befindet sich in der Messposition 15. Die Seitenwand des Behältnisses 16 besitzt in Figuren 8c) und d) beispielhaft eine entsprechende Ausnehmung 21 für den Sensor 1 und der Sensor 1 wird beispielhaft durch eine Halteeinrichtung 20, z. B. in Form einer Klemmeinrichtung, in dieser Ausnehmung 21 gehalten. Wie Figur 8 c) zu entnehmen ist, dient der Sensor 1 zum kapazitiven Erfassen eines Füllstands innerhalb des Behältnisses 16 bzw. des Behälters. Das von dem Sensor 1 im Rahmen des Messvorgangs zu detektierende Messobjekt 11 ist ein sich in dem Behältnis 16 befindliches Füllgut. Figur 8 c) zeigt einen ordnungsgemäßen Betrieb des Sensors 1, in dessen Messfeld sich zusätzlich zu dem Bestandteil 14 der Messanordnung 12, d. h. der, insbesondere dielektrischen oder leitfähigen, inneren Wandfläche 16a des Behältnisses 16 auch das Messobjekt 11 befindet. Entsprechend wird im Rahmen des kapazitiven Erfassens und Auswertens eines jeweiligen dritten Messsignals festgestellt, dass der jeweils resultierende Messwert größer als der gespeicherte Einstellwert ist. Daraufhin erfolgt ein Ausgeben des jeweiligen dritten Messsignals in Form eines Füllstands-Messsignals, z. B. mittels einer in Figur 2 gezeigten Anzeigeeinrichtung 9 oder als elektronisches Signal über einen dafür vorgesehenen Sensor-Ausgang.

Gemäß Figuren 8 b) und 8 d) befindet sich der Sensor 1 nicht bzw. nicht mehr in der Messposition, sondern hat sich vielmehr von der Oberfläche 13 der Messanordnung 12 bzw. der Wandfläche 16a des Behältnisses 16 gelöst. Dies kann z.B. durch einen Defekt der Halteeinrichtung 20 verursacht worden sein, sodass diese den Sensor 1 nicht mehr in der Messposition halten kann. Das Messobjekt 11 sowie der Bestandteil 14 der Messanordnung 12, der in Figur 8 b) die Wand des Behältnisses 16 ist und in Figur 8d) die innere Wandfläche 16a ist, befinden sich somit nur noch teilweise (siehe Figur 8b)) oder auch gar nicht mehr (siehe Figur 8d)) innerhalb des Messfeldes des Sensors 1. Entsprechend erkennt der Sensor 1 im Rahmen des kapazitiven Erfassens und Auswertens des jeweiligen dritten Messsignals, dass der entsprechende Messwert im Vergleich zu dem gemäß Figur 8 a) bzw. 8 c) erhaltenen Messwert eine negative Messwertveränderung erfahren hat. Sobald der Sensor 1 feststellt, dass der Messwert den Schwellwert erreicht und diesen insbesondere unterschreitet, gibt er ein Warnsignal aus. Insbesondere zeigt der Sensor 1 einen Einbaufehler mittels seiner Anzeigeeinrichtung optisch an, z. B. auf einem Bildschirm, und/oder er gibt das Warnsignal über einen separaten Ausgang des Sensors, z. B. in Form eines elektrischen Signals, aus, und/oder er gibt das Warnsignal mittels einer von dem Sensor umfassten Einrichtung als akustisches Warnsignal aus.

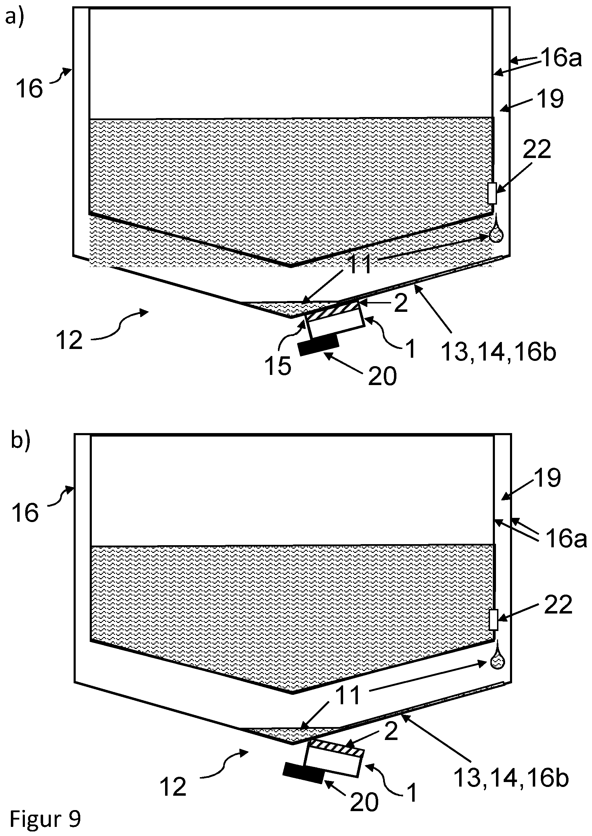

Figur 9 zeigt zwei Seitenansichten a) und b) auf einen weiteren, zweckmäßig das erfindungsgemäße Verfahren in einer Messanordnung 12 durchführenden Sensor 1 gemäß einer siebten Ausführungsform der Erfindung. Der Sensor 1 umfasst eine aktive Fläche 2 mit mindestens einer Messelektrode und mindestens einer Gegenelektrode und entspricht hinsichtlich seines inneren Aufbaus und seiner Funktionsweise dem in Figur 2 beschriebenen Sensor. Der in Figur 9 gezeigte Sensor ist beispielhaft als Leckage-Sensor bzw. LEAK-Sensor ausgebildet und zum Detektieren eines Messobjekts 11 eingerichtet, das einem aus einer Leckagestelle 22 eines Behältnisses 16 ausgetretenen Füllgut entspricht, und wird somit zum Erkennen einer Leckage eingesetzt. Gemäß Figur 9 a) befindet sich der Sensor 1 in der vorbestimmten Messposition 15, in der er mit seiner Stirnfläche, die die aktive Fläche 2 umfasst, an der Oberfläche 13 der Messanordnung 12 mittels einer Halteeinrichtung 20 angebracht ist, wobei die Halteeinrichtung 20 dazu geeignet sein muss, den Sensor 1 an der Oberfläche 13 der Messanordnung 12 entsprechend anzubringen und in der Messposition zu halten, wie zuvor bereits beschrieben, und in Figur 9 kein Bestandteil des Sensors 1 ist. In Figur 9 stellt die Oberfläche der Messanordnung 12 die Bodenfläche 16b des Behältnisses 16 dar. Das Behältnis 16 ist in Figur 9 mit einer Innenwand und einer Außenwand sowie einem inneren Boden und einem äußeren Boden ausgestaltet, wobei sich zwischen der Wandfläche 16a der Innenwand und der Wandfläche 16a der Außenwand sowie zwischen der Bodenfläche des inneren Bodens und der Bodenfläche 16b des äußeren Bodens ein Hohlraum 19 befindet. In Figur 9 hat das Behältnis 16 eine unerwünschte Leckagestelle 22, aus welcher das Füllgut von dem Innenraum des Behältnisses 16 in den Hohlraum 19 austritt. Das in den Hohlraum 19 gelangte Füllgut bzw. Messobjekt 11 sammelt sich im unteren Bereich des Hohlraums 19 zwischen äußerer und innerer Bodenfläche 16b an und kann von dem Sensor 1 im Rahmen des kapazitiven Erfassens eines dritten Messsignals detektiert werden, denn sowohl der äußere Boden des Behältnisses, der gemäß Figur 9 dem Bestandteil 14 der Messanordnung 12 entspricht, als auch das dem Messobjekt 11 entsprechende Füllgut befinden sich innerhalb des Messfeldes des Sensors 1.

In Figur 9 b) befindet sich der Sensor 1 nicht bzw. nicht mehr in der Messposition 15, sondern hat sich von der Bodenfläche 16b des Behältnisses 16 gelöst, was insbesondere aufgrund eines aufgetretenen Defekts der Halteeinrichtung 20 erfolgen kann. Das Messobjekt 11 sowie der als äußerer Boden des Behältnisses 16 ausgebildete Bestandteil 14 der Messanordnung 12 befinden sich nur noch teilweise innerhalb des Messfeldes. Sobald der Sensor 1 im Rahmen des kapazitiven Erfassens und Auswertens eines dritten Messsignals feststellt, dass der entsprechende Messwert den Schwellwert erreicht oder diesen unterschreitet, gibt er ein Warnsignal aus, wie zuvor bereits beschrieben.

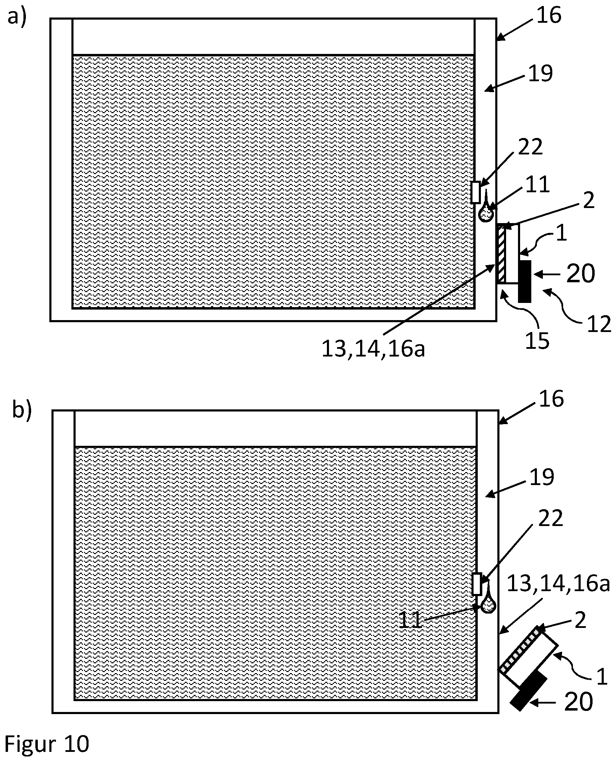

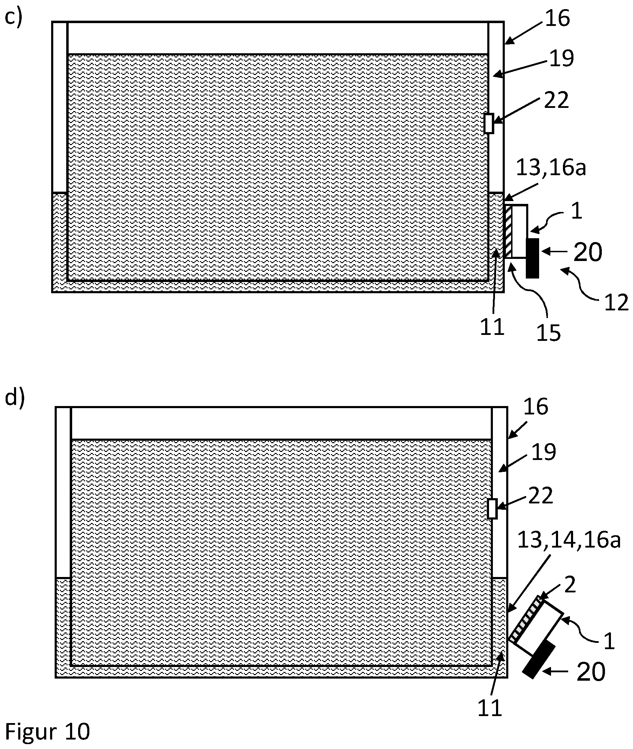

Figur 10 zeigt vier Seitenansichten a), b), c) und d) auf einen weiteren, zweckmäßig das erfindungsgemäße Verfahren in einer Messanordnung 12 durchführenden Sensor 1 gemäß einer achten Ausführungsform der Erfindung. Die in Figur 10 dargestellte Messanordnung 12 unterscheidet sich von Figur 9 im Wesentlichen nur durch die geometrische Form des Behältnisses 16 sowie durch die Anbringung des Sensors 1 an einer anderen Oberfläche 13 der Messanordnung 12, und zwar an einer Wandfläche 16a des Behältnisses 16, und somit durch die Messposition 15 des Sensors 1. Wie auch in Figur 9, so erfolgt auch in Figur 10 ein Anbringen des Sensors 1 an der Oberfläche 13 mit Hilfe einer, insbesondere separaten, Halteeinrichtung 20. Während Figuren 10 a) und 10 c) den Sensor 1 jeweils im in der Messposition 15 befindlichen Zustand darstellen, zeigen Figuren 10 b) und 10 d) den Sensor 1 jeweils in einem sich nicht bzw. nicht mehr in der Messposition befindlichen Zustand. Entsprechend erfolgt in Figuren 10 b) und 10 d) jeweils ein Ausgeben eines Warnsignals, wenn der Sensor 1 einen, aus dem erfassten dritten Messsignal resultierenden Messwert ermittelt, der gleich dem Schwellwert ist oder diesen unterschreitet.

Gemäß den Figuren 10 a) - d) hat das Behältnis 16 eine Leckagestelle 22, aus der Füllgut von dem Inneren des Behältnisses in einen Hohlraum 19 einer Doppelwand eintreten kann, wie bereits zu Figur 9 beschrieben. In Figuren 10 a) und 10 b) hat sich noch kein Füllgut, das hierbei dem zu detektierenden Messobjekt 11 entspricht, innerhalb des Hohlraums 19 angesammelt, sodass der Sensor 1 gemäß Figur 10 a) kein Messobjekt 11 detektieren kann. Dabei gilt es zu beachten, dass das Messfeld des Sensors 1 stets so mittels der Messelektronik erzeugt wird, dass die Funktion des Sensors 1 bestmöglich erfüllt wird. In Bezug auf Figur 10 heißt dies, dass das Messfeld sich von der aktiven Fläche 2 ausgehend im Wesentlichen nur bis einschließlich zur inneren Wandfläche des Behältnisses 16 erstreckt, sodass ein sich im Inneren des Behältnisses 16 befindliches Füllgut nicht fälschlicherweise von dem Sensor 1 als eine Leckage bzw. als ein aus der Leckagestelle 22 ausgetretenes Füllgut interpretiert wird. In Figuren 10 b) und 10 d) hingegen hat sich bereits eine größere Menge von Füllgut innerhalb des Hohlraum 19 angesammelt, sodass der Sensor 1 in Figur 10 c) dieses Füllgut als Messobjekt 11 detektiert und ein Leckage-Messsignal als drittes Messsignal ausgeben kann.

Die vorliegende Erfindung betrifft somit zusammenfassend ein Verfahren, einen Sensor 1 sowie eine Messanordnung 12 zum Detektieren eines Messobjekts 11 mit einer Selbstüberwachungsfunktion des Sensors hinsichtlich seiner Position. Um die Selbstüberwachungsfunktion des Sensors zu ermöglichen, ist es erforderlich, dass der Sensor vor seiner Montage kalibriert wird, d. h. die aktive Fläche 2 des Sensors muss im Rahmen einer Kalibriermessung einer Atmosphäre, z. B. Luft oder Vakuum, ausgesetzt werden, die auch während des Messvorgangs vorliegt, u. a. um eine sog. Vorbedämpfung sowie Einbautoleranzen durch Vergussmasse, Gehäuseteile, Schaltungsteile usw. auszublenden. Bei der Kalibrierung werden die positiven Messwertänderungen durch die Vorbedämpfung gespeichert. Ferner erfolgt ein sogenannter Leerabgleich im Rahmen der sog. Leereinstellung des Sensors, die in der Messposition bzw. in der endgültigen oder vorgesehenen Montageposition des Sensors ohne Vorhandensein des Messobjekts, insbesondere eines Füllguts, erfolgt. Durch die Einbaulage des Sensors geraten z. B. eine Wand oder ein Boden der Messanordnung vor die aktive Fläche des Sensors, und somit in dessen Messfeld 8, wodurch eine weitere positive Änderung der Sensorsignale, und damit eine positive Messwertänderung, verursacht wird. Die positive Messwertveränderung wird als Einstellwert ermittelt und gespeichert, der somit größer als der aus der Kalibriermessung resultierende Kalibrierwert ist. Nach der Leereinstellung wird mittels der Messelektronik, z. B. mittels einer von dieser umfassten Gerätesoftware, zwischen dem Einstellwert und dem Kalibrierwert ein Schwellwert festgelegt, der insbesondere von der Signaländerung zwischen dem Kalibrierwert und dem Einstellwert abhängig ist. Dabei kann ein Schwellwert z. B. auf Basis einer Kombination von Messwerten bzw. deren Verhältnis zueinander oder auf Basis von normierten Differenzen von Messwerten definiert werden, wobei die Messwerte in verschiedenem funktionalen Zusammenhang logisch miteinander verknüpft sein können. Es können auch mehrere Schwellwerte definiert werden, beispielsweise im Falle einer aktiven Fläche umfassend eine Mehrzahl von Messelektroden. Ausgehend von dem Einstellwert eintretende negative Messwertänderungen im Rahmen der kapazitiven Erfassung von Messsignalen bedeuten, dass eine fehlerhafte Montage des Sensors vorliegt, bei der sich der Sensor von der Messposition bzw. korrekten Montageposition gelöst bzw. entfernt hat. Es versteht sich von selbst, dass eine Halteeinrichtung, die zum Anbringen des Sensors in die vorgesehene Montageposition bzw. in die Messposition verwendet werden kann, sowie die jeweilige Montageart des Sensors so ausgebildet sein müssen, dass gewährleistet ist, dass der Sensor beim Lösen und Entfernen aus der korrekten Montageposition eine negative Messwertänderung erfährt. Der erfindungsgemäße Sensor ist somit fähig, nur über eine Bewertung seiner eigenen Sensorsignale eine Veränderung der Einbauposition eigenständig zu erkennen, d. h. ohne Verwendung zusätzlicher Hilfssignale wie z. B. von im Sensor integrierten Lagesensoren, integrierten Schaltkreisen oder einer anderen Hilfsmessung. Das erfindungsgemäße Verfahren mittels eines solchen Sensors bietet daher die Möglichkeit, eine fehlerhafte, unerwünschte Einbauposition des Sensors bzw. eine von der Messposition abweichende Position des Sensors auf eine schnelle, einfache und effiziente Weise zu erkennen.

### Bezugszeichenliste

- 1: Sensor
- 2: aktive Fläche
- 3: Messelektronik
- 4: Messelektrode
- 5: Gegenelektrode
- 6: Auswerteeinheit
- 7: Wirkrichtung Messfeld
- 8: Messfeld
- 9: Anzeigeeinrichtung
- 10: Schalteinrichtung
- 11: Messobjekt
- 12: Messanordnung
- 13: Oberfläche der Messanordnung
- 14: Bestandteil der Messanordnung
- 15: Messposition
- 16: Behältnis
- 16a: Wandfläche des Behältnisses
- 16b: Bodenfläche des Behältnisses
- 17: Sensorgehäuse
- 18: Bodenfläche eines Raums
- 19: Hohlraum
- 20: Halteeinrichtung
- 21: Ausnehmung
- 22: Leckagestelle
- 25: Warnsignal
- 26: Schaltsignal
- 30: Maschine
- R₀, R_{0,i}: Kalibrierwert
- R_{E}, R_{E,i}: Einstellwert
- S, Sᵢ: Schwellwert
- t: Zeit
- A(t): Amplitude des Messsignals
- M: Messwert
- ES: Einschaltschwelle
- AS: Ausschaltschwelle
- A: Erzeugen eines Messfeldes
- B: Ermitteln eines Kalibrierwerts
- C: Anbringen des Sensors
- D: Ermitteln eines Einstellwerts
- E: Festlegen eines Schwellwerts
- F: Aktivieren eines Messvorgangs
- G: kapazitives Erfassen und Auswerten eines dritten Messsignals
- H1: Ausgeben des dritten Messsignals
- H2: Ausgeben eines Warnsignals
- H3: Ausgeben des dritten Messsignals
- I: Anzeigen eines Warnsignals

## Patentansprüche

1. Messverfahren zum Detektieren eines Messobjekts (11) in einer Messanordnung (12) mittels eines Sensors (1), wobei der Sensor (1) eine Messelektronik (3) mit einer aktiven Fläche (2), welche mindestens eine Messelektrode (4) und mindestens eine Gegenelektrode (5) aufweist, und mit einer Auswerteeinheit (6) zum Auswerten eines von der mindestens einen Messelektrode (4) erfassten Messsignals aufweist, umfassend die Schritte:
- Erzeugen (A) eines räumlichen Messfeldes (8) durch die Messelektronik (3) des Sensors (1), wobei sich das Messfeld (8) im Wesentlichen quer zur aktiven Fläche (2) und von der aktiven Fläche (2) ausgehend erstreckt,
- Ermitteln (B) eines Kalibrierwerts (R₀) durch kapazitives Erfassen und Auswerten eines ersten Messsignals mittels der Messelektronik (3) des Sensors (1), und zwar vor Anbringung des Sensors (1) an einer Oberfläche (13) einer Messanordnung (12) zum Messen in einer Messposition (15), sowie Speichern des Kalibrierwerts (R₀) in der Messelektronik (3) des Sensors (1),
- Anbringen (C) des Sensors (1) an der Oberfläche (13) der Messanordnung (12) zum Messen in der Messposition (15), in welcher sich ein Bestandteil (14) der Messanordnung (12) innerhalb des Messfeldes (8) des Sensors (1) befindet,
- Ermitteln (D) eines Einstellwerts (R_{E}) durch kapazitives Erfassen und Auswerten eines zweiten Messsignals mittels der Messelektronik (8) des Sensors (1) bei sich in der Messposition (15) befindlichem Sensor (1) und bei fehlendem Messobjekt (11) innerhalb des Messfeldes (8) des Sensors (1) sowie Speichern des Einstellwerts (R_{E}) in der Messelektronik (3) des Sensors (1), wobei der Einstellwert (R_{E}) größer als der Kalibrierwert (R₀) ist,
- Festlegen (E) eines Schwellwerts (S) durch die Messelektronik (3) derart, dass dieser durch einen zwischen dem Kalibrierwert (R₀) und dem Einstellwert (R_{E}) liegenden Wert definiert wird,
- Aktivieren eines Messvorgangs (F) zum Detektieren des Messobjekts (11) innerhalb des Messfeldes (8) bei sich in der Messposition (15) befindlichem Sensor (1),
- kapazitives Erfassen und Auswerten eines dritten Messsignals (G) mittels der Messelektronik (3) des Sensors (1), und
- im Fall, dass das von der Messelektronik (3) ausgewertete erfasste dritte Messsignal einem Messwert (M) entspricht, der kleiner als der festgelegte Schwellwert (S, Sᵢ) oder gleich dem festgelegten Schwellwert (S, Sᵢ) ist, Ausgeben (H2) eines Warnsignals (25).

2. Messverfahren gemäß Anspruch 1, wobei das Festlegen des Schwellwerts (S) durch die Messelektronik (3) in Abhängigkeit von einer zwischen dem Einstellwert (R_{E}) und dem Kalibrierwert (R₀) vorliegenden Differenz erfolgt.

3. Verfahren gemäß Anspruch 1 oder 2, ferner umfassend zumindest einen der Schritte:
- Anzeigen (I) des Warnsignals (25) mittels einer Anzeigeeinrichtung (9) des Sensors (1),
- Ausgeben des Warnsignals (25) als akustisches Warnsignal durch den Sensor (1), und
- Ausgeben des Warnsignals (25) über einen separaten Sensor-Ausgang, insbesondere als digitales Signal.

4. Verfahren gemäß einem der Ansprüche 1 bis 3, wobei das kapazitive Erfassen des ersten, des zweiten und des dritten Messsignals ein kapazitives Erfassen einer jeweiligen Mehrzahl von ersten, zweiten und dritten Messsignalen umfasst, welche jeweils von der Auswerteeinheit (6) ausgewertet wird,
wobei das Festlegen des Schwellwerts (S) basierend auf der Mehrzahl von erfassten ersten und zweiten Messsignalen erfolgt, oder
wobei ein Festlegen mehrerer Schwellwerte (Sᵢ) basierend auf der Mehrzahl von erfassten ersten und zweiten Messsignalen erfolgt, und zwar insbesondere derart, dass ein jeweiliger Schwellwert (Sᵢ) basierend auf jeweils einem erfassten ersten und zweiten Messsignal der Mehrzahl von erfassten ersten und zweiten Messsignalen festgelegt wird.

5. Verfahren gemäß Anspruch 4, wobei die jeweilige Mehrzahl von ersten, zweiten und dritten Messsignalen dadurch erfasst wird,
- dass die aktive Fläche (2) des Sensors (1) eine Mehrzahl von Gegenelektroden (5) aufweist und an jede der Mehrzahl von Gegenelektroden (5) entweder jeweils ein Schirmpotential oder ein Anregungspotential mittels der Messelektronik (3) angelegt wird, und zwar insbesondere abwechselnd durch Ansteuerung einer von dem Sensor (1) umfassten Schalteinrichtung (10), wobei die jeweilige Mehrzahl von ersten, zweiten und dritten Messsignalen von der zumindest einen Messelektrode (4) erfasst wird, und/oder
- dass die aktive Fläche (2) des Sensors (1) eine Mehrzahl von Messelektroden (4) aufweist und mittels der Messelektronik (3) an jeweils eine der Mehrzahl von Messelektroden (4) ein Messpotential angelegt wird, und zwar insbesondere abwechselnd durch Ansteuerung einer von dem Sensor (1) umfassten Schalteinrichtung (10), und von jeder der Mehrzahl von Messelektroden (4) ein jeweiliges erstes, zweites und drittes Messsignal der Mehrzahl von ersten, zweiten und dritten Messsignalen erfasst wird.

6. Verfahren gemäß einem der Ansprüche 1 bis 5, wobei das Anbringen des Sensors (1) an der Oberfläche (13) der Messanordnung (12) durch lösbares Anbringen mittels einer Halteeinrichtung (20) erfolgt, wobei die Oberfläche (13) der Messanordnung (12) insbesondere eine Wandfläche (16a) oder eine Bodenfläche (16b) eines Behältnisses (16) oder eine Bodenfläche (18) eines Raumes ist.

7. Verfahren gemäß einem der Ansprüche 1 bis 6, wobei der Bestandteil (14) der Messanordnung (12) dielektrisch oder leitfähig ist und insbesondere die Oberfläche (13) der Messanordnung (12), an der der Sensor (1) in der Messposition (15) angebracht ist, umfasst.

8. Verfahren gemäß einem der Ansprüche 1 bis 7, wobei im Falle eines ausgewerteten erfassten dritten Messsignals, welches größer als der ermittelte Einstellwert (R_{E}) ist, das Messobjekt (11) detektiert wird und ein Ausgeben des dritten Messsignals in Form eines Leckage-Messsignals oder eines Füllstands-Messsignals (H1), insbesondere mittels einer von dem Sensor (1) umfassten Anzeigeeinrichtung (9), erfolgt.

9. Sensor (1), insbesondere Näherungssensor, zum Detektieren eines Messobjekts (11) in einer Messanordnung (12), insbesondere eingerichtet zum Durchführen des Verfahrens gemäß einem der Ansprüche 1 bis 8, aufweisend:
eine Messelektronik (3) zum Erzeugen eines räumlichen Messfeldes (8) sowie zum Detektieren eines Messobjekts (11) innerhalb des Messfeldes (8) mit
- einer aktiven Fläche (2), welche mindestens eine Messelektrode (4) und mindestens eine Gegenelektrode (5) aufweist, wobei sich das Messfeld (8) im Wesentlichen quer zur aktiven Fläche (2) und von der aktiven Fläche (2) ausgehend erstreckt, und
- einer Auswerteeinheit (6) zum Auswerten eines von der mindestens einen Messelektrode (4) erfassten Messsignals,
wobei der Sensor (1) an einer Oberfläche (13) einer Messanordnung (12) anbringbar ist, und zwar zum Messen in einer Messposition (15), in welcher sich ein Bestandteil (14) der Messanordnung (12) innerhalb des Messfeldes (8) des Sensors (1) befindet,
wobei in der Messelektronik (3) ein Kalibrierwert (R₀) speicherbar oder gespeichert ist, der auf einem ersten Messsignal basiert, das in einem nicht in der Messposition (15) befindlichen Zustand des Sensors (1) erfasst worden ist, und in der Messelektronik (3) zudem ein Einstellwert (R_{E}) speicherbar oder gespeichert ist, der auf einem zweiten Messsignal basiert, das in einem in der Messposition (15) befindlichen Zustand des Sensors (1) bei fehlendem Messobjekt (11) innerhalb des Messfeldes (8) erfasst worden ist,
wobei der Einstellwert (R_{E}) größer als der Kalibrierwert (R₀) ist,
wobei die Messelektronik (3) dazu eingerichtet ist, einen Schwellwert (S) derart festzulegen, dass dieser durch einen zwischen dem Kalibrierwert (R₀) und dem Einstellwert (R_{E}) liegenden Wert definiert ist, und
der Sensor (1) dazu eingerichtet ist, einen Messvorgang zum Detektieren des Messobjekts (11) innerhalb des Messfeldes (8) bei sich in der Messposition (15) befindlichem Sensor (1) zu starten und mittels der Messelektronik (3) ein drittes Messsignal kapazitiv zu erfassen und auszuwerten, und ferner im Fall, dass das von der Messelektronik (3) ausgewertete erfasste dritte Messsignal einem Messwert (M) entspricht, der kleiner als der festgelegte Schwellwert (S) oder gleich dem festgelegten Schwellwert (S) ist, ein Warnsignal (25) auszugeben.

10. Sensor (1) gemäß Anspruch 9, wobei die Messelektronik (3) dazu eingerichtet ist, den Schwellwert (S) in Abhängigkeit von einer zwischen dem Einstellwert (R_{E}) und dem Kalibrierwert (R₀) vorliegenden Differenz festzulegen.

11. Sensor (1) gemäß Anspruch 9 oder 10, ferner umfassend einen separaten Sensor-Ausgang zum Ausgeben des Warnsignals (25), und/oder
eine Anzeigeeinrichtung (9), die zum optischen Darstellen des Warnsignals (25) eingerichtet ist, und/oder
eine Einrichtung, die zum Ausgeben eines akustischen Warnsignals (25) ausgebildet ist.

12. Sensor (1) gemäß einem der Ansprüche 9 bis 11, wobei die Messelektronik (3) dazu eingerichtet ist, den Schwellwert (S) basierend auf einer Mehrzahl von erfassten ersten und zweiten Messsignalen festzulegen oder mehrere Schwellwerte (Sᵢ) basierend auf einer Mehrzahl von erfassten ersten und zweiten Messsignalen festzulegen, und zwar insbesondere einen jeweiligen Schwellwert (Sᵢ) basierend auf jeweils einem erfassten ersten und zweiten Messsignal der Mehrzahl von erfassten ersten und zweiten Messsignalen festzulegen.

13. Sensor (1) gemäß einem der Ansprüche 9 bis 12, wobei der Sensor (1) eine von der Messelektronik (3) umfasste Schalteinrichtung (10) umfasst, und
die aktive Fläche (2) des Sensors (1) eine Mehrzahl von Gegenelektroden (5) aufweist, wobei an jeder der Mehrzahl von Gegenelektroden (5) mittels der Schalteinrichtung (10) entweder ein Schirmpotential oder ein Anregungspotential anlegbar ist, und/oder
die aktive Fläche (2) des Sensors (1) eine Mehrzahl von Messelektroden (4) aufweist, wobei an jeweils eine der Mehrzahl von Messelektroden (4) mittels der Messelektronik (3) ein Messpotential anlegbar ist, und zwar insbesondere abwechselnd durch Ansteuerung der Schalteinrichtung (10) mittels der Messelektronik (3), und die Auswerteeinheit (6) dazu eingerichtet ist, ein von jeder der Mehrzahl von Messelektroden (4) erfasstes, jeweiliges erstes, zweites und drittes Messsignal auszuwerten.

14. Sensor (1) gemäß einem der Ansprüche 9 bis 13, wobei der Sensor (1) im ordnungsgemäßen Betrieb des Sensors (1) dazu ausgebildet ist, im Falle eines ausgewerteten erfassten dritten Messsignals, welches größer als der ermittelte Einstellwert (R_{E}) ist, das Messobjekt (11) zu detektieren und das dritte Messsignal in Form eines Leckage-Messsignals oder eines Füllstands-Messsignals auszugeben, insbesondere mittels einer von dem Sensor (1) umfassten Anzeigeeinrichtung (9) auszugeben.

15. Messanordnung (12) umfassend einen Sensor (1), insbesondere einem Sensor (1) gemäß einem der Ansprüche 9 bis 14, wobei der Sensor (1) dazu eingerichtet ist, ein Verfahren gemäß einem der Ansprüche 1 bis 8 durchzuführen.

## Geänderte Patentansprüche

### Geänderte Patentansprüche gemäss Regel 137(2) EPÜ.

1. Messverfahren zum Detektieren eines Messobjekts (11) in einer Messanordnung (12) mittels eines Sensors (1), wobei der Sensor (1) eine Messelektronik (3) mit einer aktiven Fläche (2), welche mindestens eine Messelektrode (4) und mindestens eine Gegenelektrode (5) aufweist, und mit einer Auswerteeinheit (6) zum Auswerten eines von der mindestens einen Messelektrode (4) erfassten Messsignals aufweist, umfassend die Schritte:
- Erzeugen (A) eines räumlichen Messfeldes (8) durch die Messelektronik (3) des Sensors (1), wobei sich das Messfeld (8) im Wesentlichen quer zur aktiven Fläche (2) und von der aktiven Fläche (2) ausgehend erstreckt,
**gekennzeichnet durch**:
- Ermitteln (B) eines Kalibrierwerts (R₀) durch kapazitives Erfassen und Auswerten eines ersten Messsignals mittels der Messelektronik (3) des Sensors (1), und zwar vor Anbringung des Sensors (1) an einer Oberfläche (13) einer Messanordnung (12) zum Messen in einer Messposition (15), sowie Speichern des Kalibrierwerts (R₀) in der Messelektronik (3) des Sensors (1),
- Anbringen (C) des Sensors (1) an der Oberfläche (13) der Messanordnung (12) zum Messen in der Messposition (15), in welcher sich ein Bestandteil (14) der Messanordnung (12) innerhalb des Messfeldes (8) des Sensors (1) befindet,
- Ermitteln (D) eines Einstellwerts (R_{E}) durch kapazitives Erfassen und Auswerten eines zweiten Messsignals mittels der Messelektronik (8) des Sensors (1) bei sich in der Messposition (15) befindlichem Sensor (1) und bei fehlendem Messobjekt (11) innerhalb des Messfeldes (8) des Sensors (1) sowie Speichern des Einstellwerts (R_{E}) in der Messelektronik (3) des Sensors (1), wobei der Einstellwert (R_{E}) größer als der Kalibrierwert (R₀) ist,
- Festlegen (E) eines Schwellwerts (S) durch die Messelektronik (3) derart, dass dieser durch einen zwischen dem Kalibrierwert (R₀) und dem Einstellwert (R_{E}) liegenden Wert definiert wird,
- Aktivieren eines Messvorgangs (F) zum Detektieren des Messobjekts (11) innerhalb des Messfeldes (8) bei sich in der Messposition (15) befindlichem Sensor (1),
- kapazitives Erfassen und Auswerten eines dritten Messsignals (G) mittels der Messelektronik (3) des Sensors (1), und
- im Fall, dass das von der Messelektronik (3) ausgewertete erfasste dritte Messsignal einem Messwert (M) entspricht, der kleiner als der festgelegte Schwellwert (S, Sᵢ) oder gleich dem festgelegten Schwellwert (S, Sᵢ) ist, Ausgeben (H2) eines Warnsignals (25).

2. Messverfahren gemäß Anspruch 1, wobei das Festlegen des Schwellwerts (S) durch die Messelektronik (3) in Abhängigkeit von einer zwischen dem Einstellwert (R_{E}) und dem Kalibrierwert (R₀) vorliegenden Differenz erfolgt.

3. Verfahren gemäß Anspruch 1 oder 2, ferner umfassend zumindest einen der Schritte:
- Anzeigen (I) des Warnsignals (25) mittels einer Anzeigeeinrichtung (9) des Sensors (1),
- Ausgeben des Warnsignals (25) als akustisches Warnsignal durch den Sensor (1), und
- Ausgeben des Warnsignals (25) über einen separaten Sensor-Ausgang, insbesondere als digitales Signal.

4. Verfahren gemäß einem der Ansprüche 1 bis 3, wobei das kapazitive Erfassen des ersten, des zweiten und des dritten Messsignals ein kapazitives Erfassen einer jeweiligen Mehrzahl von ersten, zweiten und dritten Messsignalen umfasst, welche jeweils von der Auswerteeinheit (6) ausgewertet wird,
wobei das Festlegen des Schwellwerts (S) basierend auf der Mehrzahl von erfassten ersten und zweiten Messsignalen erfolgt, oder
wobei ein Festlegen mehrerer Schwellwerte (Sᵢ) basierend auf der Mehrzahl von erfassten ersten und zweiten Messsignalen erfolgt, und zwar insbesondere derart, dass ein jeweiliger Schwellwert (Sᵢ) basierend auf jeweils einem erfassten ersten und zweiten Messsignal der Mehrzahl von erfassten ersten und zweiten Messsignalen festgelegt wird.

5. Verfahren gemäß Anspruch 4, wobei die jeweilige Mehrzahl von ersten, zweiten und dritten Messsignalen dadurch erfasst wird,
- dass die aktive Fläche (2) des Sensors (1) eine Mehrzahl von Gegenelektroden (5) aufweist und an jede der Mehrzahl von Gegenelektroden (5) entweder jeweils ein Schirmpotential oder ein Anregungspotential mittels der Messelektronik (3) angelegt wird, und zwar insbesondere abwechselnd durch Ansteuerung einer von dem Sensor (1) umfassten Schalteinrichtung (10), wobei die jeweilige Mehrzahl von ersten, zweiten und dritten Messsignalen von der zumindest einen Messelektrode (4) erfasst wird, und/oder
- dass die aktive Fläche (2) des Sensors (1) eine Mehrzahl von Messelektroden (4) aufweist und mittels der Messelektronik (3) an jeweils eine der Mehrzahl von Messelektroden (4) ein Messpotential angelegt wird, und zwar insbesondere abwechselnd durch Ansteuerung einer von dem Sensor (1) umfassten Schalteinrichtung (10), und von jeder der Mehrzahl von Messelektroden (4) ein jeweiliges erstes, zweites und drittes Messsignal der Mehrzahl von ersten, zweiten und dritten Messsignalen erfasst wird.

6. Verfahren gemäß einem der Ansprüche 1 bis 5, wobei das Anbringen des Sensors (1) an der Oberfläche (13) der Messanordnung (12) durch lösbares Anbringen mittels einer Halteeinrichtung (20) erfolgt, wobei die Oberfläche (13) der Messanordnung (12) insbesondere eine Wandfläche (16a) oder eine Bodenfläche (16b) eines Behältnisses (16) oder eine Bodenfläche (18) eines Raumes ist.

7. Verfahren gemäß einem der Ansprüche 1 bis 6, wobei der Bestandteil (14) der Messanordnung (12) dielektrisch oder leitfähig ist und insbesondere die Oberfläche (13) der Messanordnung (12), an der der Sensor (1) in der Messposition (15) angebracht ist, umfasst.

8. Verfahren gemäß einem der Ansprüche 1 bis 7, wobei im Falle eines ausgewerteten erfassten dritten Messsignals, welches größer als der ermittelte Einstellwert (R_{E}) ist, das Messobjekt (11) detektiert wird und ein Ausgeben des dritten Messsignals in Form eines Leckage-Messsignals oder eines Füllstands-Messsignals (H1), insbesondere mittels einer von dem Sensor (1) umfassten Anzeigeeinrichtung (9), erfolgt.

9. Sensor (1), insbesondere Näherungssensor, zum Detektieren eines Messobjekts (11) in einer Messanordnung (12), insbesondere eingerichtet zum Durchführen des Verfahrens gemäß einem der Ansprüche 1 bis 8, aufweisend:
eine Messelektronik (3) zum Erzeugen eines räumlichen Messfeldes (8) sowie zum Detektieren eines Messobjekts (11) innerhalb des Messfeldes (8) mit
- einer aktiven Fläche (2), welche mindestens eine Messelektrode (4) und mindestens eine Gegenelektrode (5) aufweist, wobei sich das Messfeld (8) im Wesentlichen quer zur aktiven Fläche (2) und von der aktiven Fläche (2) ausgehend erstreckt, und
- einer Auswerteeinheit (6) zum Auswerten eines von der mindestens einen Messelektrode (4) erfassten Messsignals,
**gekennzeichnet dadurch, dass**:
der Sensor (1) an einer Oberfläche (13) einer Messanordnung (12) anbringbar ist, und zwar zum Messen in einer Messposition (15), in welcher sich ein Bestandteil (14) der Messanordnung (12) innerhalb des Messfeldes (8) des Sensors (1) befindet,
wobei in der Messelektronik (3) ein Kalibrierwert (R₀) speicherbar oder gespeichert ist, der auf einem ersten Messsignal basiert, das in einem nicht in der Messposition (15) befindlichen Zustand des Sensors (1) erfasst worden ist, und in der Messelektronik (3) zudem ein Einstellwert (R_{E}) speicherbar oder gespeichert ist, der auf einem zweiten Messsignal basiert, das in einem in der Messposition (15) befindlichen Zustand des Sensors (1) bei fehlendem Messobjekt (11) innerhalb des Messfeldes (8) erfasst worden ist,
wobei der Einstellwert (R_{E}) größer als der Kalibrierwert (R₀) ist,
wobei die Messelektronik (3) dazu eingerichtet ist, einen Schwellwert (S) derart festzulegen, dass dieser durch einen zwischen dem Kalibrierwert (R₀) und dem Einstellwert (R_{E}) liegenden Wert definiert ist, und
der Sensor (1) dazu eingerichtet ist, einen Messvorgang zum Detektieren des Messobjekts (11) innerhalb des Messfeldes (8) bei sich in der Messposition (15) befindlichem Sensor (1) zu starten und mittels der Messelektronik (3) ein drittes Messsignal kapazitiv zu erfassen und auszuwerten, und ferner im Fall, dass das von der Messelektronik (3) ausgewertete erfasste dritte Messsignal einem Messwert (M) entspricht, der kleiner als der festgelegte Schwellwert (S) oder gleich dem festgelegten Schwellwert (S) ist, ein Warnsignal (25) auszugeben.

10. Sensor (1) gemäß Anspruch 9, wobei die Messelektronik (3) dazu eingerichtet ist, den Schwellwert (S) in Abhängigkeit von einer zwischen dem Einstellwert (R_{E}) und dem Kalibrierwert (R₀) vorliegenden Differenz festzulegen.

11. Sensor (1) gemäß Anspruch 9 oder 10, ferner umfassend einen separaten Sensor-Ausgang zum Ausgeben des Warnsignals (25), und/oder
eine Anzeigeeinrichtung (9), die zum optischen Darstellen des Warnsignals (25) eingerichtet ist, und/oder
eine Einrichtung, die zum Ausgeben eines akustischen Warnsignals (25) ausgebildet ist.

12. Sensor (1) gemäß einem der Ansprüche 9 bis 11, wobei die Messelektronik (3) dazu eingerichtet ist, den Schwellwert (S) basierend auf einer Mehrzahl von erfassten ersten und zweiten Messsignalen festzulegen oder mehrere Schwellwerte (Sᵢ) basierend auf einer Mehrzahl von erfassten ersten und zweiten Messsignalen festzulegen, und zwar insbesondere einen jeweiligen Schwellwert (Sᵢ) basierend auf jeweils einem erfassten ersten und zweiten Messsignal der Mehrzahl von erfassten ersten und zweiten Messsignalen festzulegen.

13. Sensor (1) gemäß einem der Ansprüche 9 bis 12, wobei der Sensor (1) eine von der Messelektronik (3) umfasste Schalteinrichtung (10) umfasst, und
die aktive Fläche (2) des Sensors (1) eine Mehrzahl von Gegenelektroden (5) aufweist, wobei an jeder der Mehrzahl von Gegenelektroden (5) mittels der Schalteinrichtung (10) entweder ein Schirmpotential oder ein Anregungspotential anlegbar ist, und/oder die aktive Fläche (2) des Sensors (1) eine Mehrzahl von Messelektroden (4) aufweist, wobei an jeweils eine der Mehrzahl von Messelektroden (4) mittels der Messelektronik (3) ein Messpotential anlegbar ist, und zwar insbesondere abwechselnd durch Ansteuerung der Schalteinrichtung (10) mittels der Messelektronik (3), und die Auswerteeinheit (6) dazu eingerichtet ist, ein von jeder der Mehrzahl von Messelektroden (4) erfasstes, jeweiliges erstes, zweites und drittes Messsignal auszuwerten.

14. Sensor (1) gemäß einem der Ansprüche 9 bis 13, wobei der Sensor (1) im ordnungsgemäßen Betrieb des Sensors (1) dazu ausgebildet ist, im Falle eines ausgewerteten erfassten dritten Messsignals, welches größer als der ermittelte Einstellwert (R_{E}) ist, das Messobjekt (11) zu detektieren und das dritte Messsignal in Form eines Leckage-Messsignals oder eines Füllstands-Messsignals auszugeben, insbesondere mittels einer von dem Sensor (1) umfassten Anzeigeeinrichtung (9) auszugeben.

15. Messanordnung (12) umfassend einen Sensor (1), insbesondere einem Sensor (1) gemäß einem der Ansprüche 9 bis 14, wobei der Sensor (1) dazu eingerichtet ist, ein Verfahren gemäß einem der Ansprüche 1 bis 8 durchzuführen.
